(19) Europäisches Patentamt
European Patent Office
Office européen des brevets

(11) Veröffentlichungsnummer: **0 039 451**
**B1**

(12) # EUROPÄISCHE PATENTSCHRIFT

(45) Veröffentlichungstag der Patentschrift: **25.05.83**

(51) Int. Cl.³: **C 08 F 2/12,** C 08 F 2/16

(21) Anmeldenummer: **81103079.0**

(22) Anmeldetag: **24.04.81**

(54) **Verfahren zur kontinuierlichen Herstellung von Polymerdispersionen unter Druck.**

(30) Priorität: **02.05.80 DE 3016873**

(43) Veröffentlichungstag der Anmeldung: **11.11.81 Patentblatt 81/45**

(45) Bekanntmachung des Hinweises auf die Patenterteilung: **25.05.83 Patentblatt 83/21**

(84) Benannte Vertragsstaaten: **DE FR GB IT**

(56) Entgegenhaltungen:
**DE-A-2 015 391**
**FR-A-2 078 871**
**FR-A-2 186 485**
**FR-A-2 202 906**

(73) Patentinhaber: **BAYER AG, Zentralbereich Patente, Marken und Lizenzen, D-5090 Leverkusen 1, Bayerwerk (DE)**

(72) Erfinder: **Schmidt, Adolf, Dr., Roggendorfstrasse 67, D-5000 Köln 80 (DE)**
Erfinder: **Görlich, Kurt, H. v. Dohnanyi-Strasse 44, D-5090 Leverkusen (DE)**
Erfinder: **Bartl, Herbert, Dr., Eichendorffweg 10, D-5068 Odenthal (DE)**

EP 0 039 451 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur kontinuierlichen Herstellung von Polymerdispersionen unter Druck

Die vorliegende Erfindung betrifft ein Verfahren zur kontinuierlichen Herstellung von Polymerdispersionen durch Polymerisation von gasförmigen Monomeren oder Gemischen von gasförmigen und flüssigen Monomeren in Gegenwart einer flüssigen Phase in einem Reaktor, in welchem durch regelmäßig erzeugte Druckänderungen der Füllgrad fortlaufend ermittelt und mit Hilfe eines selbsttätigen Meß- und Regelungssystems während der Polymerisation konstant gehalten wird. Die Erfindung betrifft insbesondere ein verbessertes kontinuierliches Herstellungsverfahren für wäßrige Dispersionen von Ethylen-Homo- oder Copolymerisaten. Der Füllgrad im Sinne der vorliegenden Erfindung gibt an, wieviel Prozent des Reaktorvolumens von der flüssigen Phase eingenommen werden. Er ist demnach das Hundertfache des Verhältnisses von Volumen der flüssigen Phase zum Gesamtvolumen des Reaktors.

Die Einhaltung eines bestimmten, vorgegebenen Füllgrades kann für die kontinuierliche Polymerisation in heterogener Phase erhebliche Bedeutung besitzen:

Wird beispielsweise in ein Gefäß ein konstanter Mengenstrom in diesem Gefäß reagierender Stoffe dosiert, so kann, stationärer Zustand der Reaktion vorausgesetzt, die pro Zeiteinheit entwickelte Wärmemenge unabhängig vom Füllgrad des Reaktors sein. Wie sich diese Wärmemenge indessen im Reaktor verteilt und wie sie abgeführt werden kann, hängt u. a. sehr wohl auch vom Füllgrad mit Reaktionsgemisch ab. Auch ändert sich das Verhältnis der pro Zeiteinheit entstehenden Wärmemenge zur Kühlfläche der Reaktorwandungen in Abhängigkeit vom Füllgrad des Reaktors.

Bei kontinuierlicher Fahrweise wird vom Füllstand bzw. Füllgrad des Reaktors ferner die mittlere Verweilzeit des Reaktionsgemisches abhängig sein, wobei bei festgelegter Mengenzufuhr die mittlere Verweilzeit selbstverständlich um so kürzer ist, je niedriger der Füllgrad des Reaktors ist. Von der mittleren Verweilzeit im Reaktor hängen wieder weitere, das Reaktionsgeschehen und die Produkteigenschaften bestimmende Faktoren ab.

Es kann demnach keineswegs gleichgültig sein, ob ein Reaktor vollkommen gefüllt oder mit einem Gaspolster als Puffer betrieben wird.

Der Füllgrad eines Reaktors kann in vielen Fällen leicht durch Messung des Füllstandes ermittelt werden. Der Füllstand gibt an, bis zu welcher Höhe der Reaktor mit flüssiger Phase gefüllt ist, woraus sich bei bekannter Geometrie und Volumen des Reaktors der Füllgrad berechnen läßt. Eine genaue Ermittlung des Füllstandes ist jedoch nur möglich, wenn die Flüssigkeitsoberfläche eben ist oder zumindest eine scharfe Phasengrenze zwischen flüssiger und Gasphase besteht.

Wird die Flüssigkeit in einem Gefäß gerührt oder gar geschüttelt, so kann aus dem Höhenstand der Flüssigkeit nicht mehr ohne weiteres der Füllgrad ermittelt werden.

Selbst wenn sehr gleichmäßig gerührt wird und sich definierte Rotationskörper bilden, wird dann das Volumen dieser Flüssigkeitsgebilde nicht eine bloße Funktion der Höhe, sondern eine Funktion mehrerer Veränderlicher.

Kommen nun noch variable Rührgeschwindigkeiten, Turbulenzen, Schaumbildung und chemische Reaktionen hinzu, so wird die rechnerische Bestimmung eines Flüssigkeitsvolumens aus einem außen am Gefäß ablesbaren Höhenstand zu einem nahezu unlösbaren Problem. Man ist dann auf empirische Eichmessungen angewiesen.

Es sind zahlreiche Verfahren zur Messung des Füllstandes in Behältern bekannt. Sie sind beispielsweise in dem »Handbuch der industriellen Meßtechnik« (von P. Profos, Vulkan Verlag, Essen (1974) S. 289 bis 303) beschrieben.

Es lassen sich demnach mechanische, elektromechanische, solche, bei welchen die Änderung von Gleich- und Wechselstromwiderständen gemessen wird, hydrostatische, pneumatische Verfahren, Ultraschallmessungen, radioaktive Füllstandsmessungen, Messungen mit Kraftmeßdosen, Wärmesonden, Stand- und Schaugläsern unterscheiden.

Diese bekannten Füllstandsmessungen setzen jedoch eine waagrechte und unbewegte Flüssigkeitsoberfläche voraus.

Rührvorgänge und die Bildung zäher Schäume können die mechanischen und elektromechanischen Verfahren stören. Die eintauchenden Schwimmer führen bei heftigem Rühren unruhige Bewegungen aus. Die Füllstandsanzeige wird dann von der Rührgeschwindigkeit abhängig. Man muß zur Füllstandsmessung dann bei verschiedenen Rührgeschwindigkeiten Eichmessungen vornehmen.

Selbstverständlich dürfen die in Flüssigkeiten eintauchenden Schwimmer ihre freie Beweglichkeit nicht verlieren. Es kann sich aber an ihnen oft ein Belag bilden und Produkt absetzen, so daß sie schließlich eingeklemmt werden. Es wird dann ein falscher Füllstand angezeigt.

Elektrische, kalorische oder Ultraschallmeßsonden dürfen sich ebenfalls nicht mit Produkt überziehen, sollen die Meßwerte nicht verfälscht werden.

Wo die bekannten Füllstandsmessungen berührungsfrei arbeiten oder durch die Medien in den Behältern keine Verschmutzung der Meßsonden eintreten kann wie bei der hydrostatischen Differenzdruckmessung, der radioaktiven Füllstandsmessung oder der Füllstandsmessung mit Kraftmeßdosen, sind andere Voraussetzungen erforderlich, welche nicht immer erfüllt sind:

Die hydrostatische Differenzdruckmessung wird gestört, wenn die vergleichsweise nur sehr

geringen hydrostatischen Drucke von sehr großen Drucken überlagert werden: Dies läuft dann auf die prinzipiell schwierige Bestimmung einer sehr kleinen Differenz zwischen zwei sehr großen Intensitätsgrößen hinaus. Sie wird zudem gestört durch Rührvorgänge, Erschütterungen, insbesondere aber durch Schwankungen im Gesamtdruck.

Radioaktive Messungen erfolgen berührungsfrei. Dicke Rohrwandungen und dickwandige Behälter sind kein Hindernis. Sind zwei Phasen unterschiedlicher Dichte vorhanden, welche sich scharf abgrenzen, so liefert diese Methode sehr gute Ergebnisse. Die radioaktive Füllstandsmessung ist als eine der vielseitigsten Füllstandsmeßmethoden anzusehen. Sie versagt aber, wenn bei starker Rührwirkung, die bei bestimmten chemischen Reaktionen unerläßlich ist, gegebenenfalls in Gegenwart von Emulgatoren und Dispergatoren, eine nahezu ideale Durchmischung des Druckbehälters angestrebt wird. Ein sprunghafter Übergang der Dichte von der Flüssigkeitsphase zur Gasphase ist dann nicht mehr vorhanden, und von einem »Füllstand« kann nicht mehr die Rede sein.

Die Füllstandsregelung mit Kraftmeßdosen ist bei sehr schweren Druckgefäßen, die, wie Autoklaven, für Betriebsdrucke bis 300 bar um ein Vielfaches (ca. 20—40mal) schwerer sind als die in sie eingefüllten Stoffe (der Dichte von meist ca. 0,7—1,3 g/ccm) und zudem noch durch Rührwerke in Schwingungen geraten, ebenfalls ungeeignet. Zudem müssen solche auf Kraftmeßdosen gelagerten Behälter frei stehen und dürfen nicht mit anderen Vorrichtungen starr verbunden sein.

Die Bestimmung der Flüssigkeitsstandhöhe mit Hilfe von Schaugläsern und Standgläsern ist möglich, wenn diese Höhenstandsmeßvorrichtungen den in den Behältern herrschenden Drucken standhalten und sich nicht schon nach kurzer Zeit mit Produkt eintrüben und undurchsichtig werden. Gerade beim Arbeiten mit Latex ist dies in der Regel der Fall.

Bereitet demnach schon die Bestimmung des Füllstandes und damit auch des Füllgrades in einem Gefäß mit festgehaltener Füllung Schwierigkeiten, so wird die Lage noch wesentlich erschwert, wenn Produkte zudosiert und Produkte gleichzeitig entnommen werden. Besonders unübersichtlich werden die Verhältnisse, wenn dann noch mehrere Mengenströme zulaufen und diese Mengenströme noch unterschiedliche Aggregatzustände besitzen und sich zudem noch zwischen diesen unterschiedlichen Stoffen Prozesse physikalischer oder chemischer Natur abspielen, beispielsweise Volumina sich kontrahieren oder expandieren, Drucke auf- oder abgebaut werden, Wärme entwickelt oder verbraucht wird, Änderungen von Aggregatzuständen, Löslichkeiten, chemischen Eigenschaften usw. erfolgen.

Der Füllstand eines druckfesten, kontinuierlich durchströmten und durchmischten Rührbehälters, in welchem sich z. B. eine unter hohem Druck (z. B. 200 bar) stehende Gasphase und eine Flüssigkeitsphase befinden, läßt sich nicht etwa durch Steigrohre oder seitlich angebrachte Überlaufstutzen konstant halten, wie dies in einfacher Weise bei drucklosen Verfahren geschehen kann. Bei Verfahren unter Druck ist daher die Einhaltung eines bestimmten Füllgrades bzw. Füllstandes mit erheblichen Problemen verbunden.

Aus der DE-OS 2 007 793 ist z. B. ein Verfahren zur kontinuierlichen Herstellung von Copolymerisaten bekannt, bei dem die in einem Blasensäulenreaktor unter Durchmischung mit Kreisgas erzeugte und in einen Abscheider gelangende Dispersion über eine Druckschleuse ausgetragen wird, wobei der Entspannungsvorgang vom Füllstand im Abscheider angestoßen und die Taktzeit der beiden Schleusenventile über Zeitrelais gesteuert wird (vgl. Anspruch 4 und die Abb. S. 15). Mit der gelegentlichen Entleerung des Abscheiders ist jedoch die Aufgabe der Füllgradregelung der gesamten Apparatur noch nicht vollständig gelöst. Der Füllgrad der Apparatur hängt nämlich nicht nur vom Zustand im Abscheider, sondern auch vom Zustand in der Blasensäule ab.

In der DE-OS 2 250 517 wird ein Verfahren zur Herstellung von Ethylen-Vinylester-Copolymerisaten unter Druck beschrieben, bei welchem der Füllgrad der Polymerisationsreaktoren innerhalb bestimmter Grenzen gehalten werden soll. Auf Seite 12 wird dazu angegeben, daß durch ein geeignetes Ausschleusungssystem sowohl die entstandene Dispersion als auch die nicht umgesetzten Monomeren ausgetragen werden, wobei dafür Sorge zu tragen ist, daß der Füllgrad in den Grenzen von 50—99,9%, vorzugsweise von 65—99,9%, aufrechterhalten wird. Das Verfahren verwendet Drucke von 5—120 atm, vorzugsweise von 15—60 atm Ethylen. Dabei wird ein Überschuß von 4—25% Ethylen im Reaktor bevorzugt, um sicherzustellen, daß der im Reaktor sich einstellende Druck durch einen gewissen Überschuß an Ethylen bedingt wird. Die dabei entstehenden Polymerisate besitzen Ethylengehalte von maximal 55 Gew.-%. Bei diesem Verfahren können sehr hohe Polymerisationsausbeuten von 85—99,5%, bezogen auf eingesetzten Vinylester, erzielt werden.

In der DE-OS 2 309 368 ist offenbart, daß bei der Herstellung der dort beschriebenen Dispersionen nicht nur der Druck, sondern auch der Füllgrad des Autoklaven Einfluß auf den Ethyleneinbau ins Copolymerisat besitzt. Dazu wird auf Seite 17, Absatz 3 ausgeführt, daß das Verhältnis des Volumens der im Reaktor befindlichen Dispersion zum Gesamtvolumen des Reaktors »durch geeignete regeltechnische Vorkehrungen« im Bereich von 0,7 bis 0,95 möglichst konstant zu halten sei. Weiterhin ist auf Seite 14, Absatz 3 angegeben, daß »Messungen der Kompressibilität des Autoklaveninhalts Aufschluß über den Füllgrad des Reaktors geben können«. Namentlich wird vorgeschlagen, durch Zugabe definierter Mengen von Ethylen Druckeffekte zu erzeugen, aus deren Größe man Rückschlüsse auf den Füllgrad ziehen kann.

Die vorgeschlagenen Kompressibilitätsmessungen sind nach der in Fig. 1 skizzierten apparativen

Anordnung, bei welcher Ethylen durch das von der Durchflußmenge gesteuerte Ventil 2 zugegeben wird, nur durch Eingriff von Hand möglich. Da der Austrag des Produkts laut Fig. 1 durch das druckgesteuerte Ventil 4 erfolgt und gleichzeitig Ethylen mengengesteuert über das Ventil 2 zugeführt wird, muß man zur Durchführung der Kompressibilitätsmessungen sowohl den Produktablauf als auch den Ethylenzufluß sperren. Die Messungen erfordern daher jeweils kurzfristige Unterbrechungen des Produktionsprozesses.

Diese Eingriffe in den an sich kontinuierlichen Produktionsverlauf können daher jeweils nur nach längeren Zeitabständen erfolgen. Nach Maßgabe dieser Messungen wird dann die Stärke der Ethylenzufuhr neu festgesetzt. Diese Methode gestattet es annähernd, den Füllgrad des Autoklaven in einem erwünschten Bereich zu halten. Eine exakte Konstanthaltung des Füllgrades ist damit jedoch nicht möglich, da die Reaktionsprodukte in solcher Menge entnommen werden, daß der Reaktordruck praktisch konstant bleibt; ein konstanter Füllgrad ist damit allerdings nicht gewährleistet.

Es wurde nun gefunden, daß der Füllgrad bei kontinuierlichen Polymerisationen auf einen konstanten, vorgegebenen Wert gehalten werden kann, wenn man mit Hilfe eines selbsttätigen Meß- und Regelungssystems durch im Reaktor erzeugte Druckänderungen den Füllgrad fortlaufend ermittelt und auf den vorgegebenen Wert durch Zufuhr der Reaktionsteilnehmer und/oder Ausfuhr der Reaktionsprodukte einstellt.

Gegenstand der Erfindung ist ein Verfahren zur Herstellung von, vorzugsweise wäßrigen, Polymerdispersionen durch kontinuierliche Polymerisation von gasförmigen oder gasförmigen und flüssigen Monomeren, insbesondere von Ethylen und gegebenenfalls Vinylchlorid und/oder Vinylacetat, in Gegenwart einer flüssigen Phase in einem Druckreaktor, dessen Füllgrad konstant gehalten wird, dadurch gekennzeichnet, daß durch regelmäßig wiederkehrende, im Reaktor bei konstantem Ausgangsdruck und konstanter Temperatur erzeugte Druckänderungen der Füllgrad kontinuierlich ermittelt und mit Hilfe eines selbsttätigen Meß- und Regelungssystems die Zugabe von Monomeren und flüssiger Phase und/oder die Entnahme der Reaktionsprodukte jeweils so weit erhöht oder verringert werden, daß der Füllgrad des Reaktors konstant bleibt.

Geeignete Druckänderungen im Reaktor können z. B. dadurch erzeugt werden, daß man die Zufuhr gasförmiger Monomerer und Ausfuhr von Reaktionsprodukten kurz unterbricht und definierte Flüssigkeitsvolumina in den Reaktor einpreßt. Der dadurch hervorgerufene Druckanstieg ist abhängig vom im Reaktor vorhandenen Gasraum und damit vom Füllgrad, der dadurch genau ermittelt werden kann. Gegebenenfalls kann die Bestimmung des Füllgrades mit Hilfe von zuvor ermittelten Eichkurven erfolgen. Analog kann der Füllgrad durch Druckverminderungen bestimmt werden, die z. B. bei Entnahme definierter Flüssigkeitsmengen auftreten. Geeignete Druckänderungen können beispielsweise auch dadurch hervorgerufen werden, daß man durch Bewegung eines an den Reaktorraum angeschlossenen Stempels den Gasraum in definierter Weise verkleinert oder vergrößert.

Beim erfindungsgemäßen Verfahren werden mit Hilfe eines selbsttätigen Meß- und Regelungssystems die erforderlichen Druckänderungen und die Ermittlung des Füllgrades fortlaufend und in kurzen Zeitabständen vorgenommen sowie Abweichungen des Füllgrades vom vorgegebenen Wert ständig korrigiert durch Verringerung oder Vergrößerung der Menge der in den Reaktor eingeführten Reaktionsteilnehmer und/oder der entnommenen Reaktionsprodukte. Damit werden etwaige Abweichungen des Füllgrades vom gewünschten Wert jeweils sehr gering gehalten, und der Füllgrad bleibt während des gesamten Verlaufs der kontinuierlichen Polymerisation praktisch konstant.

In einer vorteilhaften Ausführungsform des erfindungsgemäßen Verfahrens benutzt man zur Messung und Regelung des Füllgrades die Druckänderungen, die im Reaktor durch diskontinuierliche, taktmäßig aufeinanderfolgende Produktentnahmen auftreten. Durch das Füllen einer Produktschleuse, bei gleichzeitiger Unterbrechung der Gaszufuhr in den Reaktor, wird dem Reaktor eine jeweils gleichbleibende, definierte Menge an flüssiger Phase entnommen, wodurch kurzzeitig eine entsprechende Vergrößerung des Gasraums und ein Druckabfall eintritt, der zur Messung des Füllgrades dient. Bei stets gleichbleibendem Füllgrad und gleichmäßiger Zufuhr an flüssiger Phase in den Reaktor erfolgt die taktmäßige Ausschleusung der Reaktionsprodukte in gleichmäßigen Zeitabständen. Liegt der beim jeweiligen Ausschleusungstakt gemessene Füllgrad dagegen höher bzw. niedriger als der vorgegebene Wert, so wird durch das selbsttätige Meß- und Regelungssystem der folgende Ausschleusungstakt früher bzw. später ausgelöst, so daß durch schnellere bzw. langsamere Produktentnahme der gewünschte Füllgrad wieder eingestellt wird. Durch die ständige, bei jedem Ausschleusungstakt erfolgende Messung und gegebenenfalls Korrektur des Füllgrades läßt sich dieser besonders einfach und gleichzeitig sehr wirksam konstant halten.

Der dem gewünschten Füllgrad entsprechende Druckabfall, der als Maß für die Überwachung und Konstanthaltung des Füllgrades dient, kann in einfacher Weise dadurch ermittelt werden, daß man die Ausschleusungstakte zunächst in gleichmäßigen Zeitabständen vornimmt und den jeweils auftretenden Druckabfall mißt.

Das erfindungsgemäße Verfahren ist besonders zur Durchführung von Polymerisationen in Gegenwart einer wäßrigen Phase geeignet, d. h. zur Herstellung wäßriger Polymerdispersionen oder emulsionen. Vorzugsweise dient es zur Polymerisation von Ethylen, gegebenenfalls mit weiteren Monomeren, und zur Herstellung entsprechender Dispersionen von Ethylenhomo- oder -copolymerisaten. Insbesondere eignet sich das Verfahren zur Herstellung wäßriger Copolymerisatdispersionen

von Ethylen und Vinylchlorid und/oder Vinylacetat.

Das erfindungsgemäße Verfahren bewirkt einen sehr gleichmäßigen Polymerisationsablauf und führt zu Polymerisaten großer Einheitlichkeit. Es lassen sich ohne weiteres Polymerisatdispersionen mit hohen Feststoffgehalten von 50 Gew.-% und mehr herstellen.

Überraschenderweise wurde gefunden, daß bei einer erfindungsgemäßen kontinuierlichen Emulsionspolymerisation des Vinylacetats mit Ethylen bei Verwendung der gleichen Chemikalien wie im halbkontinuierlichen Chargenbetrieb, bei gleicher Temperatur, vergleichbarem bis niedrigerem Druck, jedoch bei Konstanthaltung des Füllgrades des gleichen Druckgefäßes auf ca. 75%, ein Copolymerisat mit 65 Gew.-% incorporierten Ethyleneinheiten entsteht, welches in Toluol löslich ist und ein hohes Molekulargewicht besitzt (vgl. Beispiel 10).

Ferner wurde gefunden, daß bei einem Druck von 200 bar und in einem Temperaturbereich von 60–80°C bei Anwendung des erfindungsgemäßen Verfahrens der Füllgradregelung auf die Vinylchlorid-Ethylencopolymerisation Dispersionen mit Feststoffgehalten von 45 bis 50 Gew.-% herstellbar sind, deren Polymerisat einen Ethylengehalt von 30–40 Gew.-% besitzt. Nach dem Verfahren der DE-OS 2 309 368 ist es zwar auch möglich, 45–60 Gew.-% Feststoff enthaltende Dispersionen von Vinylchlorid-Ethylen-Copoylmerisaten herzustellen, die jedoch maximal 30 Gew.-% Ethylen incorporiert enthalten, wobei ebenfalls Temperaturen von 40 bis 80°C und Drücke bis 200 bar angewendet werden.

Zusammengefaßt erlaubt das erfindungsgemäße Verfahren mit selbsttätiger Füllgradregelung z. B. bei der Ethylen-Emulsions(co)polymerisation

a) die Herstellung ethylenreicherer Copolymerisate als nach bisher bekannten Verfahren bei vergleichbaren Temperatur- und Druckverhältnissen und vergleichbarem Feststoffgehalt der Dispersionen;
b) einen gleichmäßigeren Polymerisationsablauf, welcher zur Folge hat, daß die den Reaktor verlassenden Reaktionsgemische in ihrer Zusammensetzung nur noch sehr geringfügig schwanken;
c) eine sehr gute Konstanthaltung der Polymerisationstemperatur. Dies ist insbesondere bei der Herstellung hochkonzentrierter Polyethylenlatices wichtig. Durch die strenge Füllgradkontrolle werden unkontrollierbare Reaktionsstöße vermieden;
d) eine verminderte Wandbelags- und Koagulatbildung;
e) eine erleichterte Restmonomerenaufarbeitung, da die den Reaktor verlassenden Restmonomeren, wie beispielsweise Vinylchlorid und Ethylen, in einem nahezu konstanten Verhältnis zueinander stehen. Ein derartiger Restmonomerenstrom läßt sich selbstverständlich leichter recyclisieren als ein in seiner Zusammensetzung stets schwankender Abgasstrom;
f) eine erhöhte Polymerisatausbeute, da nur noch die in der Dispersion emulgierten, absorbierten oder adsorbierten Anteile an Restmonomeren den Reaktor verlassen, und ein Durchschlagen der ethylenreichen, leichter komprimierbaren oberen Schichten im Reaktor verhindert wird.

Die durch das erfindungsgemäße Verfahren zugänglich gewordenen ethylenreichen Vinylchlorid-Ethylen-Copolymerisat-Dispersionen und die Vinylacetat-Ethylen-Copolymerisat-Dispersionen können eine umfangreiche Verwendung als Pigmentbinder finden. Für diesen Zweck können auch selbstvernetzende Copolymerisate hergestellt werden, die geeignete Monomere mit reaktiven Gruppen einpolymerisiert enthalten wie z. B. N-Methylol-acrylamid und -methacrylamid und die entsprechenden N-Methylolether. Die weichen hochmolekularen Vinylchlorid-Ethylen- und Vinylacetat Ethylen-Copolymerisat-Dispersionen können, insbesondere wenn sie vernetzt sind, z. B. durch Peroxide oder Divinylverbindungen, als Pfropfgrundlage für schlagfeste Kunststoffe Verwendung finden.

Insbesondere die Ethylen-Vinylacetat-Copolymerisate sind als Pfropfgrundlage für Vinylchlorid oder zur Abmischung mit Polyvinylchlorid geeignet. Man erhält jeweils ein schlagfestmodifiziertes Polyvinylchlorid mit u. a. erheblich verbesserter Kerbschlagzähigkeit.

Bei Polymerisationen nach dem erfindungsgemäßen Verfahren legt man vorteilhafterweise einen Keimlatex im Autoklaven vor, weil sich dann die Gleichgewichtseinstellung bei der nachfolgenden Polymerisationsreaktion rascher vollzieht.

Das erfindungsgemäße Verfahren ist für alle Polymerisationen anwendbar, bei denen gasförmige Monomere in Gegenwart einer flüssigen Phase, die gegebenenfalls weitere Monomere gelöst oder dispergiert enthält, polymerisiert werden.

Es ist ferner auf sonstige, unter Volumenkontraktion oder isochor verlaufende Reaktionen anwendbar, bei welchen im überkritischen Zustande befindliche gasförmige Stoffe, welche reaktiv oder inert sein könnn, in Gegenwart einer flüssigen, die erwähnten gasförmigen Stoffe nur begrenzt lösenden Phase, die gegebenenfalls weitere Stoffe gelöst oder dispergiert enthält, vorliegen.

Als gasförmige Stoffe seien neben dem bereits erwähnten Ethylen und Vinylchlorid Olefine wie Propylen, Buten und Isobutylen, konjugierte Diene wie Butadien und Isopren, Vinylhalogenide wie Vinylfluorid, als reaktive Stoffe ferner Kohlenmonoxid, Acetylen, Halogenwasserstoffe, Sauerstoff, Wasserstoff, Schwefelwasserstoff, Schwefeldioxid, Ammoniak und Alkylhalogenide wie Methylchlorid genannt.

Die den Gasdruck im Reaktor bestimmenden Stoffe können auch Inertgase wie Stickstoff oder Helium sein.

Der Zusammenhang zwischen Druckanstieg oder Druckabfall und Füllgrad F eines Druckgefäßes mit dem Leervolumen $V_B$ bei einer Volumenänderung um $\Delta V$ läßt sich für verschiedene im Behälter herrschende Gasdrücke $P_A$ nach der Van der Waals'schen Zustandsgleichung ermitteln. Man kann die bei einem bestimmten Druck (z. B. $P_A=100$ at oder $P_A=200$ at), einem bestimmten Druckgefäßvolumen (z. B. $V_B=42{,}0$ Liter) und bei bestimmten Temperaturen (z. B. 60, 70, 80°C) in Abhängigkeit vom Füllgrad F sich einstellenden Druckabsenkungen $\Delta P$ berechnen, wenn das Gasvolumen in dem Behälter um einen bestimmten Betrag $\Delta V$, der z. B. dem Volumen einer Ausschleusungsvorrichtung am Boden des Gefäßes entspricht, expandiert wird, und wenn die Füllung des Gefäßes aus einer Flüssigkeit besteht, in der das Gas nicht oder nur wenig löslich ist (wie z. B. in Wasser).

Man kann aber auch das Gasvolumen nach der Expansion $V+\Delta V$ zum Volumen vor der Expansion ins Verhältnis setzen und bei Vorgabe bestimmter Werte für $V+\Delta V/V$ den Druckabfall für verschiedene Drucke und Temperaturen berechnen.

Statt durch Berechnung kann auch durch einfache Vorversuche die bei einem gewünschten Füllgrad F und vorgegebenem Druck und Temperatur bei einer Volumenänderung um $\Delta V$ auftretende Druckänderung $\Delta P$ ermittelt werden. Diese Druckänderung ist bei dem erfindungsgemäßen Verfahren das Maß, d. h. der jeweils anzustrebende Soll-Wert, für die Überwachung und Konstanthaltung des Füllgrades.

In Fig. 1 ist zur Erläuterung einer Ausführungsform des erfindungsgemäßen Meß- und Regelverfahrens ein Blockschlatbild gezeigt.

Hierin bedeuten:

Block 1: Druckerfassung mit Speicherung,
Block 2: Regler mit Strom-Impulswandler,
Block 3: Steuerung,
V 1, V 2,
V 3: pneumatisch gesteuerte Ventile,
C-1: Druckgefäß mit dem Volumen $V_B$ und mit Rührwerk,
X-1: Schleuse mit dem Volumen $\Delta V$,
A-1: Temperiereinheit,
I: Zufuhr der flüssigen Komponente(n),
II: Zufuhr der gasförmigen Komponente,
III: Produktaustritt.

Das Größenverhältnis von C-1 zu X-1 ist hierbei nicht maßstabgetreu gezeichnet.

Im Normalbetrieb sind die Ventile V 2 und V 3 geöffnet und das Ventil V 1 geschlossen. Mit V 3 regelt man den Gasdruck im Rührbehälter C-1 konstant.

Auf Befehl der Steuerung schließen die Ventile V 2 und V 3, das Ventil V 1 öffnet, und die Schleuse mit dem Volumen $\Delta V$ wird gefüllt.

Unmittelbar vor dem Öffnen des Ventils V 1 wird der Druck im Gefäß C-1 mit Hilfe eines Druckwertmeßwandlers erfaßt und in ein elektrisches Einheitssignal umgewandelt (Block 1). Dieser Wert wird in einem Speicher 1, befindlich in Block 1, abgelegt. Mit dem Füllen der Schleuse fällt der Druck im Gefäß C-1, je nach dessen Füllgrad, mehr oder weniger stark ab. Dieser neue Druck-Meßwert wird wieder erfaßt und in den Speicher 2, befindlich in Block 1, gesetzt.

Das Ventil V 1 schließt danach, und V 2 und V 3 werden geöffnet. Die Schleuse X-1 entleert sich selbsttätig durch das in ihr komprimierte Gas oder wird gegebenenfalls mit einem separaten Gasstrom, beispielsweise Wasserdampf, leergeblasen.

Danach wird das Druckgefäß C-1 durch Gaszufuhr über V 3 wieder auf seinen Nenndruck P 2 gebracht.

Zwischen P 2, welcher im Innern des Druckgefäßes C-1, druckgesteuert über V 3, aufrechterhalten wird und dem Schleusenaustritt III besteht ein großes, konstantes Druckgefälle.

Die beiden Signale in den in Block 1 befindlichen Speichern 1 und 2 werden nun voneinander subtrahiert und stehen in Form eines elektrischen Signals, als $\Delta$p-Istwert, zur Verfügung. In Block 2 wird nun der $\Delta$p-Istwert mit dem gewünschten $\Delta$p-Sollwert verglichen und entsprechend der Abweichung als zeitlich verschobenes Signal auf die Steuerung in Block 3 gegeben. Bei größer werdendem $\Delta$p erfolgen dann die Ausschleusungstakte schneller, bei kleiner werdendem $\Delta$p langsamer.

Bei dem in Block 2 befindlichen Regler kann ein handelsüblicher, elektronischer stetiger Regler verwendet werden, welcher die anstehenden Signale des Ist- und Sollwertes miteinander vergleicht und, entsprechend ihrer Regelabweichung, ein stetiges elektrisches Signal abgibt.

Als Regler können digital oder analog arbeitende Proportionalregler eingesetzt werden. Der zu wählende Verstärkungsfaktor ist abhängig vom Füllgrad. Im allgemeinen wird bei kleinerem Füllgrad ein größerer, bei höherem Füllgrad ein kleinerer Verstärkungsfaktor gewählt.

Das Reglersignal wird in einem nachgeschalteten Strom-Impulswandler in einen Impuls umgeformt, welcher als Steuerbefehl die Steuerung in Block 3 in Betrieb setzt.

In Block 3 ist die Steuerung untergebracht. Diese sorgt dafür, daß die zur Druckhaltung und Ausschleusung erforderlichen Ventile V 1, V 2, V 3 zur richtigen Zeit und in der richtigen Reihenfolge öffnen und schließen.

Eine Anlage zur Anwendung des erfindungsgemäßen Verfahrens ist in dem Fließbild Fig. 2 dargestellt.

In Fig. 2 bedeuten:

C-1 Rührautoklav, Leervolumen 42,7 Liter, Nenndruck 320 bar mit motorgetriebenem Blattrührer (Drehzahl regelbar im Bereich von 0—300 Upm). Der Autoklavendeckel besitzt Bohrungen für die erforderlichen Zuleitungen, z. B. für den Ethylenzutritt sowie für die mit den Pumpen PU 1 bis PU 4 zu fördernden Mengenströme.

X-1 Schleuse mit dem Volumen $\Delta V = 0{,}110$ Liter, Nenndruck 300 bar oder mit dem Volumen $\Delta V = 0{,}180$ Liter, Nenndruck 300 bar, wobei die kleinere Schleuse bei Drucken über 100 bar verwendet wird.

A-1 Druckwassertemperiereinheit.

V-1, V-2, V-3 } Pneumatisch angesteuerte Regelventile für Ethylenzufuhr und Produktentnahme.

PU 1, PU 2, PU 3, PU 4 } I Dosierpumpen (Betriebsdruck bis 350 bar) für die Zufuhr flüssiger Monomerer, z. B. Vinylacetat, und Emulgator- und Aktivatorlösungen, z. B.

»Wäßrige Emulgatorlösung«:
Wäßrige Emulgatorlösung, beispielsweise enthaltend: anionische Emulgatoren, Schutzkolloide, wasserlösliche Monomere, gegebenenfalls Vernetzergruppen enthaltende Monomere, Inhibitoren, Schwermetallsalze und Puffersubstanzen.

»Aktivatorlösung I«:
Wäßrige Initiatorlösung, beispielsweise von Peroxodisulfaten, Hydroperoxiden oder Azodinitrilen. Die Aktivatorlösung I kann über ein Steigrohr oder Bodenventil auch direkt in die untere, mehr wäßrige »Phase« gegeben werden, ebenso die Aktivatorlösung II und die wäßrige Emulgatorlösung.

»Aktivatorlösung II«:
Wäßrige Lösung von reduzierend wirkenden Komponenten, welche mit oxidierenden Komponenten der Aktivatorlösung I ein Redoxsystem bilden, beispielsweise Sulfite, Hydrogensulfite oder Formaldehyd-Sulfoxylate.

II Zufuhr gasförmiger Monomerer, z. B. Ethylen,

III Produktentnahme.

Es bedeuten in Fig. 2 ferner die Abkürzungen:

PC: Druckregelung,
PI: Druckanzeige,
FQIR: Ethylenmengenerfassung mit Anzeige und Registrierung,
LIRC: Füllgradanzeige mit Registrierung und Regelung (entsprechend den Blöcken 1—3 in Fig. 1)
PIRC: Druckanzeige mit Registrierung und Regelung,
M: Rührmotor,
F 1: Gasmengenerfassung,
L 1: Füllgradregelung, wie bereits im Text erläutert,
P 1: Vordruck,
P 2: Im Druckgefäß herrschender Druck.

Erläuternd sei zu Fig. 2 noch hinzugefügt:

Der Autoklav C-1 wird mit Hilfe eines Druckwassertemperieraggregats A-1 auf der gewünschten Innentemperatur, gemessen in der flüssigen Phase im Reaktor, gehalten, wobei vorzugsweise eine Reglerkaskade eingesetzt wird. Auf diese Weise können eventuell auftretende exo- und endotherme Effekte ausgeglichen werden.

Das zugeführte Ethylen wird mit Hilfe eines mechanischen Druckreglers auf konstantem Vordruck, P-1, gehalten. Der Rührkesseldruck P 2 wird mit einer Zweipunktregelung in engen Grenzen konstant gehalten.

Das in den Reaktor eingeführte, gegebenenfalls auf die Reaktionstemperatur vorerwärmte Ethylen wird in seiner Menge erfaßt. Der gemessene Mengenstrom wird registriert, um den zeitlichen Polymerisationsverlauf zu verfolgen, und integriert.

Die flüssigen Mengenströme werden mit Hilfe der Pumpen PU 1 bis PU 4 in den Rührautoklav

eingepumpt, wobei eine zeitlich konstante Dosierung dieser Mengenströme, insbesondere der Aktivatorlösungen, eingehalten wird.

Die über die Schleuse X-1 aufgenommenen Rohdispersionen werden einer Entgasung zugeleitet. Das entweichende Abgas wird in die Einzelkomponenten aufgetrennt. Diese können wieder als Monomere zum Einsatz gelangen (RECYLING).

Beispiel 1

Der Versuch zeigt den Zusammenhang zwischen dem Füllgrad F eines Druckbehälters und der zur Erzielung eines bestimmten Druckabfalls zu entnehmenden Menge einer Probe.

In einen sauberen, mit Ethylen gespülten und danach evakuierten 42,7-Liter-Autoklav, Betriebsdruck 320 bar, mit Bodenablaßventil und Einfüllstutzen am Deckel, werden 45 100 g koagulatfreier Vinylchlorid-Ethylen-Copolymerisatlatex mit einem Feststoffgehalt von ca. 50 Gew.-% gebracht.

Die Dichte dieses Latex beträgt bei 20° C $\varrho = 1{,}12$ (g/cm³), bei 60° C $\varrho = 1{,}10$ (g/cm³).

Danach wird der Latex unter Rühren (120 Upm) auf eine Temperatur von +60° C aufgeheizt und der Druck nach Erreichen der Temperatur durch Aufpressen von Ethylen auf genau 100 bar ($p_A$) eingestellt.

Über ein Bodenventil des Autoklaven läßt man so viel Latex ab, daß der Druck auf genau 95 bar ($p_E$) sinkt. Das Gewicht der entnommenen Probe wird bestimmt. Danach wird durch Aufpressen von Ethylen erneut ein Druck von 100 bar im Autoklaven eingestellt und die nächste Probe bis zum Druckabfall auf 95 bar entnommen usw.

In Tab. 1 ist das Ergebnis der Messungen aufgezeigt. Angeführt ist die fortlaufende Zahl der Proben (Spalte 1), der Druckabfall von $p_A = 100$ at auf $p_E$ (vgl. Spalte 2, Tab. 1; $p_E$ meist 95 bar, in einigen Fällen wurde zur Beschleunigung des Verfahrens mehr Substanz abgelassen als einem Druckabfall von 5 bar entspricht), das Gewicht der jeweils abgelassenen Latexproben (Spalte 3), die bis zur jeweiligen Entnahme insgesamt abgelassene Latexmenge (Spalte 4), die im Autoklav befindliche Latexmenge (Spalte 5), das im Autoklav vorhandene Latexvolumen (Spalte 6), der Füllgrad F in ganzen Zahlen (Spalte 7) gerundet, das Gasvolumen im Behälter (Spalte 8), und das Volumen der abgelassenen Latexproben (Spalte 9).

Das Experiment zeigt, daß die Menge Latex, welche abgelassen werden muß, um einen bestimmten, konstanten Druckabfall zu bewirken, davon abhängt, wieviel Latex noch im Autoklav vorhanden ist: je höher der Füllgrad ist, um so weniger Produkt tritt aus, um einen vorgegebenen Druckabfall zu erreichen.

Beispiel 2

Der Versuch von Beispiel 1 wird wiederholt, jedoch werden anstelle von 45 100 g Latex 38 800 g Latex eingefüllt und bei 50 Upm gerührt. Die Messungen werden wieder bei $p_A = 100$ bar und 60° C Innentemperatur durchgeführt. Es wird wieder diejenige Latexmenge in Abhängigkeit vom Füllgrad im Autoklaven ermittelt, welche einen Druckabfall von 5 bar bewirkt. Die Anordnung in Tab. 2 entspricht völlig der von Tab. 1. Die Rührgeschwindigkeit beeinflußt die Füllgradmessung nicht signifikant.

Tabelle 1

Latex

| Probe Nr. | $P_E$ (bar) | Probe (g) | Gewicht d. Proben (g) | Menge i. Aut. (g) | Volumen i. Aut. (ccm) | Füllgr. F (%) | Gas-V (ccm) | Probe-V (ccm) |
|---|---|---|---|---|---|---|---|---|
| 1 | 95 | 15 | 15 | 45 085 | 40 986 | 96 | 1 714 | 13,64 |
| 2 | 95 | 15 | 30 | 45 070 | 40 973 | 96 | 1 727 | 13,64 |
| 3 | 95 | 10 | 40 | 45 060 | 40 964 | 96 | 1 736 | 9,1 |
| 4 | (50) | 180 | 220 | 44 880 | 40 800 | 96 | 1 900 | 163,6 |
| 5 | 95 | 15 | 235 | 44 865 | 40 786 | 96 | 1 914 | 13,63 |
| 6 | 95 | 15 | 250 | 44 850 | 40 773 | 95 | 1 927 | 13,64 |
| 7 | (50) | 180 | 430 | 44 670 | 40 609 | 95 | 2 091 | 163,6 |
| 8 | 95 | 15 | 445 | 44 655 | 40 595 | 95 | 2 105 | 13,64 |
| 9 | 50 | 205 | 650 | 44 450 | 40 409 | 95 | 2 291 | 186,4 |
| 10 | 95 | 15 | 665 | 44 435 | 40 395 | 95 | 2 305 | 13,6 |
| 11 | 50 | 390 | 1 055 | 44 045 | 40 041 | 94 | 2 659 | 354,5 |
| 12 | 95 | 20 | 1 075 | 44 025 | 40 023 | 94 | 2 677 | 18,2 |
| 13 | 95 | 20 | 1 095 | 44 005 | 40 004 | 94 | 2 696 | 18,2 |
| 14 | 95 | 20 | 1 115 | 43 985 | 39 986 | 94 | 2 714 | 18,2 |
| 15 | 95 | 20 | 1 135 | 43 965 | 39 968 | 94 | 2 732 | 18,2 |
| 16 | (63) | 1 410 | 2 545 | 42 555 | 38 686 | 91 | 4 014 | 1 281,8 |
| 17 | 95 | 200 | 2 745 | 42 355 | 38 504 | 90 | 4 196 | 181,8 |
| 18 | 95 | 220 | 2 965 | 42 135 | 38 305 | 90 | 4 395 | 200 |
| 19 | 95 | 260 | 3 225 | 42 375 | 38 068 | 89 | 4 632 | 236,4 |
| 20 | 95 | 290 | 3 515 | 41 585 | 37 804 | 89 | 4 896 | 263,6 |
| 21 | 95 | 310 | 3 825 | 41 275 | 37 522 | 88 | 5 178 | 281,8 |
| 22 | 95 | 350 | 4 175 | 40 925 | 37 204 | 87 | 5 496 | 318,2 |
| 23 | 95 | 405 | 4 580 | 40 520 | 36 836 | 86 | 5 864 | 328,2 |
| 24 | 95 | 430 | 5 010 | 40 090 | 36 445 | 85 | 6 255 | 390,9 |
| 25 | 95 | 465 | 5 475 | 39 625 | 36 023 | 84 | 6 677 | 422,7 |
| 26 | 95 | 525 | 6 000 | 39 100 | 35 545 | 83 | 7 155 | 477,3 |
| 27 | 95 | 545 | 6 545 | 38 555 | 35 050 | 82 | 7 650 | 495,4 |
| 28 | 95 | 580 | 7 125 | 37 975 | 34 523 | 81 | 8 177 | 527,3 |

Tabelle 1 (Fortsetzung)

| Probe Nr. | $P_E$ (bar) | Probe (g) | Gewicht d. Proben (g) | Menge i. Aut. (g) | Volumen i. Aut. (ccm) | Füllgr. F (%) | Gas-V (ccm) | Probe-V (ccm) |
|---|---|---|---|---|---|---|---|---|
| 29 | 95 | 620 | 7 745 | 37 355 | 33 959 | 80 | 8 741 | 563,6 |
| 30 | 95 | 690 | 8 435 | 36 665 | 33 332 | 78 | 9 368 | 627,3 |
| 31 | 95 | 740 | 9 175 | 35 925 | 32 659 | 76 | 10 041 | 672,73 |
| 32 | 95 | 795 | 9 970 | 35 130 | 31 936 | 75 | 10 764 | 722,73 |
| 33 | 95 | 870 | 10 840 | 34 260 | 31 145 | 73 | 11 555 | 790,9 |
| 34 | 95 | 925 | 11 765 | 33 335 | 30 304 | 71 | 12 396 | 840,91 |
| 35 | 95 | 965 | 12 730 | 32 370 | 29 427 | 69 | 13 273 | 877,3 |
| 36 | 95 | 1 050 | 13 780 | 31 320 | 28 472 | 67 | 14 228 | 954,5 |
| 37 | 95 | 1 145 | 14 925 | 30 175 | 27 432 | 64 | 15 268 | 1 041,0 |
| 38 | 95 | 1 245 | 16 170 | 28 930 | 26 300 | 62 | 16 400 | 1 132,0 |

Tabelle 2

Latex

| Probe Nr. | $P_E$ (bar) | Probe (g) | Gewicht d. Proben (g) | Menge i. Aut. (g) | Volumen i. Aut. (ccm) | Füllgr. F (%) | Gas-V (ccm) | Probe-V (ccm) |
|---|---|---|---|---|---|---|---|---|
| 1 | 95 | 520 | 520 | 38 280 | 34 800 | 81 | 7 900 | 473 |
| 2 | 95 | 620 | 1 140 | 37 660 | 34 236 | 80 | 8 464 | 564 |
| 3 | 95 | 660 | 1 800 | 37 000 | 33 636 | 79 | 9 064 | 600 |
| 4 | 95 | 745 | 2 545 | 36 255 | 32 959 | 77 | 9 741 | 677 |
| 5 | 95 | 765 | 3 310 | 35 490 | 32 264 | 75 | 10 436 | 695 |
| 6 | 95 | 790 | 4 100 | 34 700 | 31 545 | 74 | 11 155 | 718 |
| 7 | 95 | 815 | 4 915 | 33 885 | 30 804 | 72 | 11 896 | 741 |
| 8 | 95 | 840 | 5 755 | 33 045 | 30 041 | 71 | 12 659 | 764 |
| 9 | 95 | 905 | 6 660 | 32 140 | 29 218 | 68 | 13 482 | 823 |
| 10 | 95 | 970 | 7 630 | 31 170 | 28 336 | 66 | 14 364 | 882 |
| 11 | 95 | 1 105 | 8 735 | 30 065 | 27 332 | 64 | 15 368 | 1 004 |
| 12 | 95 | 1 140 | 9 875 | 28 925 | 26 295 | 62 | 16 405 | 1 036 |
| 13 | 95 | 1 200 | 11 075 | 27 725 | 25 204 | 59 | 17 496 | 1 091 |
| 14 | 95 | 1 260 | 12 335 | 26 465 | 24 059 | 56 | 18 641 | 1 145 |

Aus Beispiel 2 folgt, ebenso wie aus Beispiel 1, daß bei Konstanthaltung des Druckabfalles $\Delta p$ die Menge des aus dem Druckbehälter zu entnehmenden Produktes ein Maß für den Füllgrad F des Autoklaven mit diesem Produkt ist.

## Beispiel 3

In Beispiel 1 und Beispiel 2 wurde das Produkt bei konstantem Druckabfall entnommen. Jetzt wird ein konstantes Schleusenvolumen vorgegeben, d. h., es werden konstante Produktmengen entnommen und der bei sinkendem Füllgrad jeweils auftretende Druckabfall gemessen.

Am Autoklaven (42,7 Liter) C-1 (vgl. Fig. 2) wird eine Ausschleusungsvorrichtung X-1 mit dem Volumen $\Delta V = 0{,}110$ Liter angebracht.

In den evakuierten und mit Ethylen gespülten Autoklav werden 40 kg Vinylchlorid-Ethylen-Copolymerisatlatex der Dichte $\varrho = 1{,}1$ (g/ccm bei +65° C) eingebracht. Danach heizt man den Latex auf 65° C unter Rühren (120 Upm) auf. Ist die vorgeschriebene Temperatur erreicht, wird ein Druck von genau 200 bar Ethylen eingestellt. Danach wird die Ausschleusungsvorrichtung in Gang gesetzt, die in gleichbleibenden Zeitabständen konstante Mengen des Latex aus dem Autoklaven entnimmt.

Bei geschlossenem V 3 und V 2 wird V 1 (vgl. Fig. 2) geöffnet, und die Schleuse X-1 wird gefüllt.

Danach schließt V 1, und es öffnen V 2 und V 3. Über V 2 wird der Latex in ein Meßgefäß entspannt und dort genau gewogen. Über V 3 wird der Druck $p_A$ erneut auf 200 bar eingestellt.

V 3 und V 2 schließen, und es folgt der nächste Ausschleusungstakt. Der pro Schleusentakt auftretende Druckabfall wird jeweils registriert. $\Delta p = p_A - p_E$ ($p_E$: der nach der Ausschleusung sich einstellende Enddruck) wird mit zunehmender Zahl der Schleusentakte und damit mit abnehmendem Füllgrad des Autoklaven immer kleiner. Die Registrierung des Druckabfalls ergibt ein Schreiberdiagramm, wie in Fig. 3 dargestellt.

Tabelle 3 stellt die Ergebnisse einer derartigen Ausschleusungsmeßreihe dar.

Angeführt in Tabelle 3 sind die Zahl der Schleusentakte (Spalte 1), die in 5 Schleusentakten ausgetragene Latexmenge (Spalte 2) und die Latexmenge pro Takt (Spalte 3). Diese Menge, dividiert durch das Schleusenvolumen, ergibt dann die »Dichte« der inhomogenen Schleusenfüllung (Spalte 4). In Spalte 5 wird die ausgeschleuste Menge aufsummiert, in Spalte 6 die im Autoklav befindliche Menge angegeben, wobei die Zahlen der Spalte 5 und 6 die eingefüllte Latexmenge in Gramm, nämlich 40 000, ergeben. Unter Vernachlässigung der Kompressibilität der flüssigen Phase berechnet sich das im Autoklav vorhandene Latexvolumen aus dem Latexgewicht durch Division desselben durch die Dichte des Latex bei 65° C und Normaldruck, $\varrho = 1{,}1$ g/ccm (vgl. Spalte 7).

Der Füllgrad F, Spalte 8, gerundet in ganze Zahlen, errechnet sich aus dem Latexvolumen nach dem jeweils 5. Takt der Schleuse, dividiert durch das Fassungsvermögen $V_B$ des Autoklaven (42 700 $cm^3$), das im Autoklaven verbleibende Gasvolumen (Spalte 9) aus der Bilanz $V_B - V_{fl} = V_{Gas}$.

Der gefundene Druckabfall $\Delta p$ wird am Ende dem nach der van der Waalsschen Gleichung berechneten Wert für $\Delta p$ gegenübergestellt. In Fig. 4 ist $\Delta p$ gegen den Füllgrad aufgetragen. Die ausgezogene Kurve entspricht den nach der realen Gasgleichung berechneten Werten, die eingezeichneten Punkte sind die gefundenen Meßwerte.

Bemerkenswert an dieser Meßreihe ist, daß die pro Schleusentakt ausgetragene Latexmenge mit abnehmendem Füllgrad des Autoklaven ebenfalls abnimmt. Daher nimmt auch die »Dichte« des ausgeschleusten (inhomogenen) Mediums kontinuierlich ab. Ein sprunghafter Wechsel der »Dichte« findet demnach nicht statt. Dennoch liefert die erfindungsgemäße Füllgradmessung über das zu messende $\Delta p$ eine zuverlässige Information über den Füllgrad des Autoklaven. Für den Druckabfall ist nur entscheidend das Volumen der Schleuse und das Verhältnis V Gas : V flüssig im Autoklav.

Die Meßreihe zeigt auch, warum andere Meßmethoden der Füllstandsmessung, welche letztlich einen diskontinuierlichen Phasenübergang flüssig-gasförmig voraussetzen, ungeeignet sind. Die »Dichte« des ausgeschleusten Mediums (vgl. Spalte 4) ändert sich kontinuierlich vom Wert 1,07 bis hinunter zu 0,71 $g/cm^3$.

Tabelle 3

| Takt-zahl | Pro 5 Takte ausgeschleuste Menge (g) | g/Takt | Dichte der Schleusenfüllung ($g/cm^3$) | Gesamte ausgeschleuste Menge (g) | Menge Latex im Autoklav (g) | Volumen Latex im Autoklav ($cm^3$) | F Füllgrad (%) | Gasvolumen im Autoklav ($cm^3$) | Δ p (bar) gefunden | Δ p (bar) berechnet |
|---|---|---|---|---|---|---|---|---|---|---|
| 0–5 | 570 | 114 | 1,036 | 570 | 39 430 | 35 845 | 84 | 6 855 | 9,6 | 9,38 |
| 5–10 | 590 | 118 | 1,073 | 1 160 | 38 840 | 35 309 | 83 | 7 391 | 9,34 | 8,77 |
| 10–15 | 585 | 117 | 1.064 | 1 745 | 38 255 | 34 777 | 81 | 7 923 | 8,88 | 8,21 |
| 15–20 | 575 | 115 | 1,045 | 2 320 | 37 680 | 34 254 | 80 | 8 446 | 8,28 | 7,70 |
| 20–25 | 575 | 115 | 1,045 | 2 895 | 37 105 | 33 732 | 79 | 8 968 | 7,60 | 7,30 |
| 25–30 | 575 | 115 | 1,045 | 3 470 | 36 530 | 33 209 | 78 | 9 491 | 7,24 | 6,90 |
| 30–35 | 565 | 113 | 1,027 | 4 035 | 35 965 | 32 695 | 77 | 10 005 | 6,80 | 6,56 |
| 35–40 | 555 | 111 | 1,009 | 4 590 | 35 410 | 32 191 | 75 | 10 509 | 6,46 | 6,21 |
| 40–45 | 555 | 111 | 1,009 | 5 145 | 34 855 | 31 686 | 74 | 11 014 | 6,20 | 5,93 |
| 45–50 | 540 | 108 | 0,982 | 5 685 | 34 315 | 31 195 | 73 | 11 505 | 5,88 | 5,69 |
| 50–55 | 535 | 107 | 0,973 | 6 220 | 33 780 | 30 709 | 72 | 11 991 | 5,68 | 5,52 |
| 55–60 | 540 | 108 | 0,982 | 6 760 | 33 240 | 30 218 | 71 | 12 482 | 5,52 | 5,29 |
| 60–65 | 525 | 105 | 0,954 | 7 285 | 32 715 | 29 741 | 70 | 12 959 | 5,40 | 5,11 |
| 65–70 | 520 | 104 | 0,954 | 7 805 | 32 195 | 29 268 | 69 | 13 432 | 5,28 | 4,88 |
| 70–75 | 520 | 104 | 0,954 | 8 325 | 31 675 | 28 795 | 67 | 13 905 | | 4,62 |
| 75–80 | 510 | 102 | 0,927 | 8 835 | 31 165 | 28 332 | 66 | 14 368 | 4,84 | 4,48 |

Fortsetzung

| Taktzahl | Pro 5 Takte ausgeschleuste Menge (g) | g/Takt | Dichte der Schleusenfüllung ($g/cm^3$) | Gesamte ausgeschleuste Menge (g) | Menge Latex im Autoklav (g) | Volumen Latex im Autoklav ($cm^3$) | F Füllgrad (%) | Gasvolumen im Autoklav ($cm^3$) | Δ p (bar) gefunden | Δ p (bar) berechnet |
|---|---|---|---|---|---|---|---|---|---|---|
| 80–85 | 500 | 100 | 0,909 | 9 335 | 30 665 | 27 877 | 65 | 14 823 | | 4,30 |
| 85–90 | 490 | 98 | 0,891 | 9 825 | 30 175 | 27 432 | 64 | 15 268 | 4,62 | 4,23 |
| 90–95 | 480 | 96 | 0,873 | 10 305 | 29 695 | 26 995 | 63 | 15 705 | | 4,11 |
| 95–100 | 475 | 95 | 0,864 | 10 780 | 29 220 | 26 564 | 62 | 16 136 | 4,4 | 4,00 |
| 100–105 | 475 | 95 | 0,864 | 11 255 | 28 745 | 26 132 | 61 | 16 568 | | 3,94 |
| 105–110 | 460 | 92 | 0,836 | 11 715 | 28 285 | 25 714 | 60 | 16 986 | 4,18 | 3,82 |
| 110–115 | 455 | 91 | 0,827 | 12 170 | 27 830 | 25 300 | 59 | 17 400 | | 3,76 |
| 115–120 | 455 | 91 | 0,827 | 12 625 | 27 375 | 24 886 | 58 | 17 814 | 3,96 | 3,64 |
| 120–125 | 435 | 87 | 0,791 | 13 060 | 26 940 | 24 491 | 57 | 18 209 | | 3,58 |
| 125–130 | 435 | 87 | 0,791 | 13 495 | 26 505 | 24 095 | 56 | 18 605 | 3,74 | 3,52 |
| 130–135 | 435 | 87 | 0,791 | 13 930 | 26 070 | 23 700 | 55 | 19 000 | | 3,46 |
| 135–140 | 420 | 84 | 0,764 | 14 350 | 25 650 | 23 318 | 55 | 19 382 | 3,60 | 3,38 |
| 140–145 | 410 | 82 | 0,745 | 14 760 | 25 240 | 22 948 | 54 | 19 755 | | 3,35 |
| 145–150 | 405 | 81 | 0,736 | 15 165 | 24 835 | 22 577 | 53 | 20 123 | 3,50 | 3,34 |
| 150–155 | 400 | 80 | 0,727 | 15 565 | 24 435 | 22 213 | 52 | 20 487 | | 3,28 |
| 155–160 | 390 | 78 | 0,709 | 15 955 | 24 045 | 21 859 | 51 | 20 741 | 3,30 | 3,04 |

## Beispiel 4

### Füllgradgeregelte Emulsionspolymerisation von Ethylen

Es werden 600 l einer klaren Lösung aus folgenden Komponenten hergestellt:

| | |
|---|---|
| Entionisiertes Wasser | 95,132 Gew.-Teile |
| Methallylsulfonsaures Natrium | 0,956 Gew.-Teile |
| $C_{12}-C_{18}$-Alkylsulfonat, Na-Salz | 1,912 Gew.-Teile |
| $Na_2CO_3$, wasserfrei | 1,000 Gew.-Teile |
| $K_2S_2O_8$ | 1,000 Gew.-Teile |
| | 100,000 Gew.-Teile |

In einen 42,7-Liter-Autoklav entsprechend Fig. 2 mit Rührwerk, Ethylenzufuhr, Zuleitung für wäßrige Lösung, Ausschleusungsvorrichtung (Volumen = 0,110 Liter), Entspannungsgefäß und Gasuhr sowie der beschriebenen meß- und regeltechnischen Einrichtungen werden 36,0 kg (≙ 87,8% Füllgrad) Polyethylenlatex der Dichte 0,96 (bei 20° C) mit einem Feststoffgehalt von 42 Gew.-% eingefüllt.

Danach wird die Luft im Autoklavenraum durch Ethylen verdrängt, der Autoklav verschlossen und auf 80° C aufgeheizt.

Nach Erreichen der vorgeschriebenen Temperatur werden 200 bar Ethylen aufgepreßt.

Von der oben angeführten Emulgator-Aktivator-Lösung in Wasser werden nun 3,0 Liter pro Stunde (Volumenangabe bei 20° C) gleichmäßig zugepumpt, und die Ausschleusungsvorrichtung wird in Gang gesetzt. Nach ca. 10 Minuten ist die Polymerisation angesprungen.

Vor dem Einsetzen der Polymerisation erfolgen die Ausschleusungstakte in gleichmäßigen Zeitabständen. Der dabei jeweils gemessene Druckabfall, hier 20 bar, entspricht dem Sollwert bei dem gewünschten, vorgegebenen Füllgrad, hier 87,8%.

Der Regler wird nun auf einen Druckabfall von p = 20 bar eingestellt, welcher bei jedem Schleusentakt auftreten soll (Sollwert). Wird der Druckabfall größer (der Autoklav also voller), so schleust die Vorrichtung schneller aus, wird er kleiner, so verlangsamen sich die Schleusentakte.

Schon nach 2 – 3 Stunden stellt sich im Autoklav ein stationärer Zustand ein, erkennbar am gleichmäßigen Eintritt des Ethylens und an den nahezu äquidistanten Ausschleusungstakten. Folgende Beobachtungen werden gemacht:

1) Die pro Zeiteinheit von der Meß- und Regelvorrichtung ausgetragene Latexmenge stellt sich in engen Grenzen selbsttätig konstant ein. Pro Stunde entstehen ca. 5,2 kg Latex. Der Latex besitzt einen Feststoffgehalt von 42 ± 1,0% und eine Dichte von 0,96 g/ccm bei 22° C. Die Austragsschleuse (0,110 Liter Leervolumen) nimmt in der Stunde auf Befehl der Füllgradregelungsvorrichtung etwa fünfzig (50 ± 4 Takte) Ausschleusungen vor.
2) Die füllgradgeregelte Verfahrensweise erlaubt eine sehr gleichmäßige Temperaturführung. Es stellt sich zwischen Innentemperatur im Reaktor und der Kühlmanteltemperatur eine nahezu gleichbleibende Differenz ein.
3) Obwohl das Ethylen nicht mengen-, sondern druckgesteuert zugeführt wird, ist die pro Zeiteinheit vom Reaktor aufgenommene Ethylenmenge annähernd konstant. Dies ist die zwangsläufige Folge des stationären Zustands im Reaktor, der durch die füllgradgesteuerte Ausschleusung erhalten wird.
4) Man kann die Polymerisation auch gezielt heftiger oder langsamer verlaufen lassen. Verändert man den Sollwert der Füllgradregelung nach niedrigerem $\Delta p$, z. B. $\Delta p = 10$ bar, so stellt sich ein höherer Feststoffgehalt des Latex ein und die Polymerisationswärme wird größer.
5) Geringe Störungen im Zupumpen der wäßrigen Lösung werden von der Füllgradregelung mühelos auskompensiert.

Nach 200 Betriebsstunden wurde die Polymerisation beendet. Im Autoklaven befinden sich 37,2 kg Latex. Ursprünglich wurden 36,0 kg Polyethylenlatex eingesetzt. Der Füllgrad ist demnach während der Polymerisation praktisch konstant geblieben.

Die Autoklavenwände waren nur im obersten Teil mit einem dünnen Film von ca. 1 mm Stärke belegt; dort, wo sich stets die dichtere flüssige Phase befand, war die Wand blank.

Der Latex enthielt nur geringfügige Koagulatanteile (ca. 1,5‰, bezogen auf Feststoff). Er ist sehr scherstabil und kurz nach Auftrocknen bei Zimmertemperatur wieder mit Wasser redispergierbar. Die bei erhöhter Temperatur eingebrannten Filme sind jedoch klar und wasserfest.

Durch Zusatz von Ethanol läßt sich das Polyethylen aus der Dispersion als feines, weißes Pulver ausfällen. Nach dem Absaugen und Trocknen läßt sich die Viskositätszahl $|\eta|$ in Tetralin bestimmen. Das Polymere ist in Tetralin bei 120° C gelfrei löslich. Viskosität $|\eta| = 0{,}5$ (dl/g, 120° C, Tetralin).

Der Latex kann als Abmischkomponente mit anderen Dispersionen zur Verbesserung der Blockfestigkeit dienen, zur Hydrophobierung von Pigmenten benutzt werden und eignet sich insbesondere zur Herstellung von Masterbatches.

## Beispiel 5

### Kontinuierliche Herstellung eines Vinylchlorid-Ethylenlatex

Es werden folgende Lösungen hergestellt:

Wäßrige Emulgatorlösung (A)

| | |
|---|---|
| Wasser, entionisiert | 94,15 Gew.-Teile |
| Hydroxyethylcellulose | 0,13 Gew.-Teile |
| Natriumlaurylsulfat | 2,00 Gew.-Teile |
| $NaHCO_3$ | 1,42 Gew.-Teile |
| Acrylamid | 2,30 Gew.-Teile |
| | 100,00 Gew.-Teile |

Aktivatorlösung I (B)

| | |
|---|---|
| Wasser, entionisiert | 91,89 Gew.-Teile |
| Ammoniumperoxodisulfat | 7,65 Gew.-Teile |
| Ammoniakwasser, 25%ig | 0,46 Gew.-Teile |
| | 100,00 Gew.-Teile |

Aktivatorlösung II (C)

| | |
|---|---|
| Wasser, entionisiert | 98,52 Gew.-Teile |
| Natriumformaldehydsulfoxylat | 1,48 Gew.-Teile |
| | 100,00 Gew.-Teile |

Ein 42,7-Liter-Autoklav wird mit 38,0 kg Vinylchlorid-Ethylenlatex (ca. 50%ig) gefüllt, die Luft aus dem Autoklavenraum durch Ethylen verdrängt und der Autoklav verschlossen. Nach dem Aufheizen auf 65° C preßt man 100 bar Ethylen auf.

Nun werden folgende Mengenströme eingepumpt:

| | |
|---|---|
| Lösung A | 1750 ccm/h |
| Lösung B | 300 ccm/h |
| Lösung C | 300 ccm/h |
| Vinylchlorid | 2000 ccm/h |

Der Regler der Füllgradregelung wird nach Einsetzen der Polymerisation auf einen Druckabfall von $\Delta p = 1,3$ bar pro Schleusentakt (180-ccm-Schleuse) eingestellt. Die Ermittlung dieses Sollwertes erfolgt wie in Beispiel 4 angegeben.

Im Verlauf von 200 Stunden entstehen 920 kg Latex, entsprechend 4,6 kg/h.

Während der Polymerisation werden alle 20 Stunden Proben entnommen. Ermittelt wird an ihnen:

1. Der Feststoffgehalt
2. Mittlere Filmbildungstemperatur (gemessen nach DIN 53 787)
3. pH-Wert
4. Tropfenzahl Latex (TRZ) (diejenige Zahl an Tropfen, in welche 1 ccm Latex bei 20° C zerlegt wird, wenn in der gleichen Tropfenzählapparatur (Stalagmometer) Wasser von 20° C eine Tropfenzahl von 24 besitzt)
5. Zentrifugentest: 10 ccm Latex werden in einer Laborzentrifuge bei 8000 Upm 15 Minuten lang zentrifugiert. Danach wird der Latex abgegossen und das in der Spitze des Zentrifugengläschens festsitzende Sediment mit Wasser redispergiert, getrocknet und gewogen. Angegeben wird die Menge an getrocknetem Sediment pro 10 ccm Dispersion.
6. Chlorgehalt der Klarfilme, hergestellt durch Auftrocknen der Dispersion und nachfolgender Vakuumtrocknung bis zur Gewichtskonstanz (% Chlor, bezogen auf Feststoff).

Die ermittelten Werte sind in nachfolgender Tabelle 4 aufgeführt.

Tabelle 4

| | |
|---|---|
| Feststoffgehalt (%) | 49,5 ± 2% |
| MFT (°C) | 14 ± 2°C |
| pH-Wert | 7,8 ± 0,2 |
| TRZ, Latex | 55 ± 0,4 |
| | (TRZ $H_2O$ 24 ± 0) |
| Sediment (g/10 ccm) | 0,32 ± 0,04 |
| Chlorgehalt Klarfilm (%) | 42,7 ± 0,5 |

Die in Tabelle 4 angeführten, nur geringfügig schwankenden Werte lassen den Schluß auf eine sehr gleichmäßige Reaktion zu.

Wird ohne die erfindungsgemäße Füllgradregelung der gleiche Ansatz polymerisiert, so ergeben sich, je nach Genauigkeit der Ethylenzufuhr, sehr schwankende Werte. Der Feststoffgehalt des Latex kann dann um etwa ±5%, die mittlere Filmbildungstemperatur um etwa ±6°C und der Chlorwert des Polymerisats um etwa ±2% schwanken.

Am Ende der Polymerisation befanden sich 37,6 kg Latex im Autoklaven. Eingesetzt wurden 38,0 kg. Der Füllgrad ist also durch die erfindungsgemäße Füllgradregelung praktisch konstant gehalten worden. Ohne Anwendung dieser Füllgradregelung sind Schwankungen im Füllgrad möglich, welche im Extremfall bis zur weitgehenden Entleerung des Reaktors führen können. Der nach vorliegender Vorschrift hergestellte Latex kann als Pigmentbinder für Innen- und Außenanstriche, als Binder für Zementmörtel und zur Verklebung von Glasfasern verwendet werden.

## Beispiel 6

### Herstellung eines weichen Vinylchlorid-Ethylen-Copolymerisats

Beispiel 5 wird wiederholt, jedoch mit der Abänderung, daß

1. die Polymerisationstemperatur auf 75°C erhöht,
2. anstelle der 180-ccm-Schleuse eine 110-ccm-Schleuse verwendet,
3. der Druck von 100 bar auf 200 bar erhöht, und
4. eine Druckdifferenz von 6 bar für die Ausschleusungstakte

vorgegeben wird.

Pro Stunde fallen ca. 4,7 kg Latex an.

Der Latex besitzt eine MFT von 0 – 5°C.

Die aufgetrockneten Filme enthalten 36,0 ± 1,5% Chlor.

Der Feststoffgehalt liegt bei 46 ± 1,5%.

Der Latex trocknet zu weichen, geschmeidigen, aber nicht klebrigen Filmen auf. Das Polymerisat ist in Tetrahydrofuran nur noch zum Teil löslich. Der lösliche Anteil zeigt Viskositätszahlen $[\eta] = 0,8 - 1,0$ (25°C, THF). Latices dieses Typs lassen sich als Binder für die Teppichrückenbeschichtung, zur Herstellung von Tapeten und als Papierbinder verwenden.

Nach etwa 200 Betriebsstunden war der Füllgrad des Reaktors praktisch noch konstant: nach dem Entspannen befanden sich ca. 30 kg Latex im Autoklav. Eingefüllt wurden ca. 33 kg.

## Beispiel 7

### Herstellung einer Vinylchlorid-Vinylacetat-Ethylen-Copolymerisat-Dispersion

Es werden folgende Lösungen hergestellt (alle Angaben in Gewichtsteilen):

Wäßrige Emulgatorlösung A:

| | |
|---|---|
| Entionisiertes Wasser | 93,65 |
| Maleinsäurehalbester, Na-Salz [1]) | 3,34 |
| Methacrylamidoisobutansulfonsäure, Na-Salz [2]) | 0,67 |
| Natriumlaurylsulfat | 1,34 |
| Hydroxyethylcellulose | 1,00 |
| | 100,00 |

[1]) = 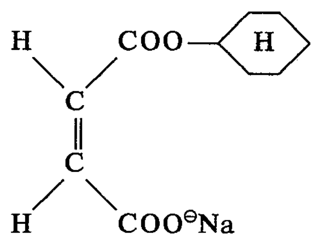

[2]) = 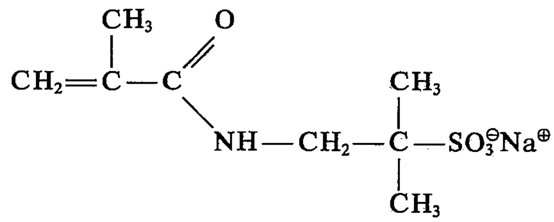

Aktivatorlösung I (B)

| | |
|---|---|
| Entionisiertes Wasser | 86,20 |
| Ammoniumperoxodisulfat | 6,90 |
| Ammoniumhydrogencarbonat | 6,90 |
| | 100,00 |

Aktivatorlösung II (C)

| | |
|---|---|
| Entionisiertes Wasser | 98,43 |
| Natriumformaldehydsulfoxylat | 1,57 |
| | 100,00 |

Ein 42,7-Liter-Autoklav wird mit einem ca. 50%igen Keimlatex gefüllt, welcher die Zusammensetzung des gewünschten Copolymerisats besitzt. Nach dem Einfüllen von 36 kg Keimlatex wird die Luft aus dem Autoklavenraum durch Ethylen verdrängt, der Autoklav verschlossen, auf 60° C aufgeheizt, 60 bar Ethylen aufgepreßt und folgende Mengenströme eindosiert:

| | |
|---|---|
| Lösung A | 1750 $cm^3$/h |
| Lösung B | 375 $cm^3$/h |
| Lösung C | 375 $cm^3$/h |
| Vinylchlorid | 1700 $cm^3$/h entspr. 1630 g/h |
| Vinylacetat | 710 $cm^3$/h entspr. 663 g/h |

Die Füllgradregelung wird auf einen Druckabfall von 1,24 bar eingestellt. Die Schleuse besitzt dabei ein Volumen von 180 $cm^3$.

Im Verlaufe von 300 Stunden werden 30 Proben entnommen. Folgende Ergebnisse werden erhalten:

| | |
|---|---|
| Latexausstoß/h | ca. 5,2 kg |
| Feststoffgehalt: | 51,6 ± 0,5% |
| MFT: | 12,0 ± 1° C |
| pH-Wert: | 5,6 ± 0,2 |
| TRZ, Latex: | 39 ± 1 |
| Sediment (g/10 ccm): | 0,75 ± 0,15 |
| Chlorgehalt (Klarfilm): | 30,6 ± 0,3% |
| Vinylacetatgehalt (Klarfilm): | 19,2 ± 3% |

Am Ende der Polymerisation befinden sich ca. 36 kg Latex im Autoklav, d. h. der Füllgrad ist konstant geblieben. Der Latex ist trotz des hohen Sedimentwertes in der Zentrifuge (15 Minuten 8000 Upm) über 2 Jahre ohne Bodensatzbildung lagerfähig. Er ist als Bindemittel für Innen- und Außenanstriche hervorragend geeignet.

Beispiel 8 (Vergleichsbeispiel)

In Tabelle 5 sind 4 Rezepturen für eine diskontinuierliche Polymerisation von Vinylchlorid mit Ethylen in einem 3-Liter-Autoklav (Blattrührer mit 250 Upm), belastbar bis 350 bar, angeführt.

Es werden hierbei in der wäßrigen Phase dieselben Chemikalien benutzt wie bei Versuchen Beispiel 5 und 6. Auch die mengenmäßigen Anteile der eingesetzten Stoffe ist, abgesehen von den Monomeren, die gleiche wie bei den Beispielen 5 und 6.

Die Versuche A bis D des vorliegenden Beispiels werden wie folgt durchgeführt:

Im 3-Liter-Autoklav wird zunächst jeweils die Lösung 1 vorgelegt, die Luft im Autoklavenraum durch Ethylen verdrängt, danach die betreffende Menge Vinylchlorid zugepumpt und auf 65°C aufgeheizt. Der Ethylendruck wird dann zunächst bei Versuch A und B jeweils auf 80 bar, bei Versuch C und D zunächst jeweils auf 200 bar eingestellt.

Die Aktivatorlösungen 2 und 3 werden danach rasch in ca. 3 min hinzugepumpt. Sofort nach Zugabe der Lösungen 2 und 3 wird bei den Versuchen A und B je ein Druck von 100 bar, bei den Versuchen C und D jeweils ein Druck von 250 bar durch Zugabe von Ethylen eingestellt. Sinkt nun der Druck im Innern der Gefäße unter 100 bzw. 250 bar, so öffnen sich die druckgesteuerten Ventile und liefern das verbrauchte Ethylen nach.

Die Versuche A und D verlaufen heftig, und eine Temperaturkontrolle ist nur bei sorgfältiger Temperaturregelung möglich. Nach 6 Stunden Polymerisationsdauer wird auf 30°C abgekühlt und der Autoklaveninhalt entspannt. Die Latices der Versuche A und D enthalten sehr viel Koagulat; daher wurde auf eine Feststoffbestimmung des Latex verzichtet; die Latices der Versuche B und C enthielten Koagulatmengen von 10 und 28 Gramm.

Die Chlorgehalte der nach den Rezepturen A – D hergestellten Copolymerisate sind in der vorletzten Zeile der Tabelle 5 angeführt. Bei den Versuchen A und B, welche bei 100 bar Ethylendruck durchgeführt werden, wird weit weniger Ethylen ins Copolymerisat eingebaut als beim Versuch Beispiel 6; das in Beispiel 6 angeführte Copolymerisat besitzt einen Chlorgehalt von 42,7%, die Versuche A und B ergeben Produkte mit Chlorgehalten von 49,2 und 48,1%. Dispersionen auf der Basis derartig zusammengesetzter Vinylchlorid-Ethylencopolymerisate sind jedoch bei 20°C nicht filmbildend und scheiden daher als Bindemittel für Anstriche aus. Beim Vergleichsversuch C entsteht zwar ein gerade noch filmbildender Latex. Zu seiner Herstellung ist aber ein Druck von 250 bar nötig. Außerdem liegt der Feststoffgehalt dieser Dispersionen bei nur 30 Gew.-% und damit weit uanter dem für handelsübliche Produkte erwünschten Wert von ca. 50 Gew.-%. Versucht man nun, den Feststoffgehalt zu steigern, indem man mehr Vinylchlorid einsetzt (Versuch D), so entstehen, abgesehen von der schwer unter Kontrolle zu haltenden Polymerisation und der Koagulatbildung, wieder Produkte mit einem unerwünscht hohen Vinylchloridanteil im Copolymerisat.

Dagegen entsteht beim Verfahren gemäß Beispiel 5 bei einem um 150 bar niedrigeren Druck nicht nur ein Copolymerisat mit der gewünschten Menge an einpolymerisierten Einheiten von Vinylchlorid, sondern das Verfahren erlaubt darüber hinaus noch die Herstellung ca. 50%iger Dispersionen nach einem kontinuierlichen und damit überaus wirtschaftlichen Verfahren, bei welchem ein einfaches Recycling der Monomeren durch den gleichmäßigen Polymerisationsverlauf ermöglicht wird.

Tabelle 5

| | Versuch A | B | C | D |
|---|---|---|---|---|
| Lösung 1 | | | | |
| Wasser, entionisiert (g) | 1062 | 1062 | 1062 | 1062 |
| Natriumlaurylsulfat (g) | 19,1 | 19,1 | 19,1 | 19,1 |
| Natriumbicarbonat (g) | 13,6 | 13,6 | 13,6 | 13,6 |
| Acrylamid (g) | 22,0 | 22,0 | 22,0 | 22,0 |
| Hydroxyethylzellulose (g) | 1,24 | 1,24 | 1,24 | 1,24 |
| $NH_3$ in Wasser, 25%ig (g) | 0,75 | 0,75 | 0,75 | 0,75 |
| Vinylchlorid (g) | 1092,0 | 550,0 | 550,0 | 1092,0 |
| Lösung 2 | | | | |
| Wasser, entionisiert (g) | 100 | 100 | 100 | 100 |
| $(NH_4)_2S_2O_8$ (g) | 12,5 | 12,5 | 12,5 | 12,5 |
| Lösung 3 | | | | |
| Wasser (g) | 50,0 | 50,0 | 50,0 | 50,0 |
| Na $SO_2CH_2OH$ | 2,4 | 2,4 | 2,4 | 2,4 |
| Druck (bar) | 100 | 100 | 250 | 250 |
| Temperatur (° C) | ca. 65 | 65 | 65 | ca. 65 |
| Latex, Feststoff | – | ca. 30% | ca. 30% | – |
| % Cl im Polymerisat | 49,2 | 48,1 | 43,3 | 47,2 |
| Latex (g) | Koagulat | 1705 | 1720 | Koagulat |

## Beispiel 9

### Kontinuierliche Ethylen-Vinylacetat-Copolymerisation

In einen 42,7-Liter-Autoklav mit angeschlossener Ausschleusungsvorrichtung (Volumen: 0,110 Liter) füllt man 32 kg eines Vinylacetat-Ethylen-Latex.

Prinzipiell kann als Vorlage jeder stabile, ca. 50%ige, restmonomerenfreie Keimlatex verwendet werden, beispielsweise der nach Beispiel 7 hergestellte Latex.

Dieser Dispersion fügt man eine Lösung von 50 g Ammoniumperoxidisulfat, gelöst in 3 Liter entionisiertem Wasser, unter Rühren hinzu.

Der Autoklav wird verschlossen und die Luft aus dem Autoklavenraum durch Ethylen verdrängt. Bei Raumtemperatur (ca. 22° C) wird nun ein Druck von 50 bar Ethylen aufgepreßt und auf 65° C aufgeheizt. Nach Erreichen der gewünschten Polymerisationstemperatur, 65° C, wird der Druck auf genau 200 bar eingestellt. Rührgeschwindigkeit 120 Upm. Nun beginnt man mit der Zudosierung folgender Lösungen:

Lösung 1

| | |
|---|---|
| Wasser | 97,12 Gew.-Teile |
| $(NH_4)_2S_2O_8$ | 0,85 Gew.-Teile |
| $C_{12}-C_{18}$-Alkylsulfonat, Na-Salze | 0,90 Gew.-Teile |
| Hydroxyethylcellulose | 0,70 Gew.-Teile |
| $NaHCO_3$ | 0,43 Gew.-Teile |
| | 100,00 Gew.-Teile |

Lösung 2

| | |
|---|---|
| Wasser | 96,04 Gew.-Teile |
| Natriumformaldehydsulfoxylat, $NaSO_2CH_2OH$ | 2,00 Gew.-Teile |
| Na-Alkylsulfonatgemisch, wie Lösung 1 | 1,96 Gew.-Teile |
| | 100,00 Gew.-Teile |

Es werden pro Zeiteinheit zugepumpt:

| | |
|---|---|
| Lösung 1 | 2900 ccm/h (20° C) |
| Lösung 2 | 300 ccm/h (20° C) |
| Vinylacetat | 1200 ccm/h(20° C) |

Man trägt zunächst mit Hilfe der Schleuse ca. 55 Takte pro Stunde aus, bis die Polymerisation nach 1 bis 1 1/2 Stunden in Gang gekommen ist.

Dann wird die Füllgradregelautomatik auf einen Druckabfall-Sollwert von 15 bar eingestellt.

Der Ansatz reagiert völlig gleichmäßig, wobei viel Ethylen aufgenommen wird. Pro Stunde werden ca. 5,7 kg Latex ausgeschleust. Der Latex besitzt eine zähflüssige Konsistenz.

Der Latex, welcher einen Feststoffgehalt von ca. 46% besitzt und einen pH-Wert von 5 aufweist, trocknet zu klebfreien Filmen auf. Das Polymerisat ist beispielsweise in heißem Toluol löslich. Es besitzt eine Viskositätszahl $|\eta|$ dl/g = 1,28 in Toluol bei 90° C. Ein Gelanteil ist nur in Spuren vorhanden. Nach 100 Betriebsstunden befanden sich 32,7 kg Dispersion im Autoklav, d. h. der Füllgrad ist parkatisch konstant geblieben. Vinylacetatbestimmungen an Filmen ergaben einen konstant bleibenden Wert von ca. 35 ± 2%.

Das Polymerisat bildet gut walzbare weiche Felle und besitzt eine Mooney-Viskosität von 13. Es ist nach peroxidischer Vernetzung als Pfropfgrundlage für schlagzähe Kunststoffe verwendbar. Die Pfropfung kann in Lösung und in Emulsion erfolgen.

Die Polymerisation kann bei gleichen Ethylendruck auch mit einem Monomerengemisch, bestehend aus 99 Gew.-Teilen Vinylacetat und 1 Gew.-Teil eines Vernetzers wie Divinyladipat oder Norbornadien durchgeführt werden. Derartige Latices sind zur Herstellung von schlagfesten PVC besonders gut geeignet.

Beispiel 10 (Vergleichsbeispiel zu Beispiel 9)

Halbkontinuierliche Vinylacetat-Ethylen-Copolymerisation

In einen 42,7-Liter-Autoklaven mit Rührer wird eine Lösung folgender Komponenten eingefüllt:

| | |
|---|---|
| Entionisiertes Wasser | 15 000 g |
| Ammoniumperoxidisulfat | 60 g |
| Alkansulfonat-Na-Salze wie in Beispiel 9 | 50 g |
| Hydroxyethylzellulose wie in Beispiel 9 | 100 g |
| $NaHCO_3$ | 40 g |

Danach werden die Luft aus dem Autoklavenraum verdrängt und durch Ethylen ersetzt und bei Zimmertemperatur 1350 g Vinylacetat unter Rühren hinzugepumpt (120 Upm). Dann preßt man bei Zimmertemperatur 100 bar Ethylen auf und heizt auf 60° C auf. Beim Erreichen von 60° C drückt man 180 bar Ethylen auf. Nun wird eine Lösung von:

| | |
|---|---|
| Wasser (entionisiert) | 375,0 g |
| Natriumformaldehydsulfoxylat | 18,35 g |

in 10 Minuten zugepumpt.

Es wird eine Stunde die Temperatur bei 65° C gehalten, danach der Ethylendurck auf 200 bar erhöht.

Nun beginnt die Zudosierung folgender Mengenströme im Verlaufe von 7 Stunden:

Lösung 1:

| | |
|---|---|
| Entionisiertes Wasser | 1000,0 g |
| Hydroxyethylcellulose | 13,3 g |
| Natriumformaldehydsulfoxylat | 18,35 g |
| Alkansulfonat-Na-Salze wie in Beispiel 9 | 20,00 g |

Lösung 2:

| | |
|---|---|
| Entionisiertes Wasser | 3000,00 g |
| Ammoniumperoxidisulfat | 93,80 g |
| Hydroxyethylzellulose | 13,3 g |
| Alkansulfonat-Na-Salze wie in Beispiel 9 | 129,7 g |
| $NaHCO_3$ | 37,82 g |

sowie 8100 g Vinylacetat.

Die Polymerisation setzt nach der Aktivierung ein und wird mit zunehmender Zeit immer heftiger. Nach der Zugabe aller Komponenten wird unter Aufrechterhaltung eines Druckes von 200 bar 3 Stunden nachgerührt, danach bei 60° C entspannt.

Es resultieren hierbei, je nach Ansatz, 34 bis 37 kg einer Dispersion mit einem Feststoffgehalt von ca. 44 bis 46 Gew.-%. Die Dispersionen trocknen zu etwas klebrigen Filmen auf. Das Polymerisat enthält 48 bis 53% Vinylacetat. Außerdem besitzen die Polymerisate einen beträchtlich schwankenden, bis 35% betragenden Gelgehalt. Der lösliche Anteil besitzt Viskositätszahlen $|\eta|$ dl/g = 0,6 – 1,0 (90° C, Toluol).

Das Polymerisat der Vergleichsrezeptur unterscheidet sich somit grundsätzlich von dem Produkt gemäß Beispiel 9, welches wesentlich mehr Ethylen incorporiert enthält.

## Beispiel 11

### Herstellung eines selbstvernetzenden Vinylchlorid-Ethylen-Copolymerisats

Beispiel 6 wird wiederholt, jedoch mit der Abänderung, daß anstelle der wäßrigen Lösung (A), vgl. Seite 41, folgende Lösung eingesetzt wird:

| | |
|---|---|
| Wasser, entionisiert | 90,15 Gew.-Teile |
| Hydroxiethylcellulose | 0,13 Gew.-Teile |
| Natriumlaurylsulfat | 2,00 Gew.-Teile |
| $NaHCO_3$ | 1,42 Gew.-Teile |
| Acrylamid | 2,30 Gew.-Teile |
| N-Methoximethylacrylamid | 4,00 Gew.-Teile |
| | 100,00 Gew.-Teile |

Von dieser Lösung werden 1750 ccm/h zugepumpt. Die anderen Mengenströme B, C und Vinylchlorid (vgl. S. 42) werden beibehalten. Pro Stunde entstehen ca. 4,6 kg Latex.

Der Latex besitzt eine MFT von 5 – 8° C. Die aufgetrockneten Latexfilme enthalten ca. 37 Gew.-% Chlor. Der Feststoffgehalt des Latex liegt bei ca. 45 Gew.-%. Der entgaste und mit Natronlauge auf pH = 7 eingestellte Latex, dem gegebenenfalls noch übliche PVC-Stabilisatoren zugesetzt werden, kann als Binder für den Textildruck Verwendung finden. Er zeichnet sich durch eine hervorragende Redispergierbarkeit und Farbausbeute aus und das Pigmentbindevermögen in benzinreichen und bezinfreien Pigmentpastensystemen ist ausgezeichnet. Der Binder ist in seinen Echtheiten mit den besten marktüblichen Bindern vergleichbar, besitzt aber ein wesentlich preisgünstigeres Monomerensystem bei gleichzeitig bequemer Herstellungsweise. Von den nach halbkontinuierlichen Verfahren herstellbaren entsprechend zusammengesetzten Bindern unterscheidet sich vorliegender Binder durch seine verbesserte Redispergierbarkeit, welche in der breiten Latexteilchendurchmesserverteilung des erfindungsgemäßen Binders begründet ist. Selbstverständlich können anstelle von N-Methoximethylacrylamid auch andere an sich bekannte Vernetzter, beispielsweise N-Methylolmaleinamide, eingesetzt werden.

**Patentansprüche**

1. Verfahren zur Herstellung von Polymerdispersionen durch kontinuierliche Polymerisation von gasförmigen oder gasförmigen und flüssigen Monomeren in Gegenwart einer flüssigen Phase in einem Druckreaktor, dessen Füllgrad konstant gehalten wird, dadurch gekennzeichnet, daß durch regelmäßig wiederkehrende, im Reaktor bei konstantem Ausgangsdruck und konstanter Temperatur

erzeugte Druckänderungen der Füllgrad kontinuierlich ermittelt und mit Hilfe eines selbsttätigen Meß- und Regelungssystems die Zugabe von Monomeren und flüssiger Phase und/oder die Entnahme der Reaktionsprodukte jeweils so weit erhöht oder verringert werden, daß der Füllgrad des Reaktors konstant bleibt.

2. Verfahren nach Anspruch 1, dadurch gekennzeichnet, daß die Reaktionsprodukte taktmäßig über eine Produktschleuse entnommen werden, durch die dabei im Reaktor auftretende Druckänderung der Füllgrad ermittelt und dementsprechend der jeweils folgende Ausschleusungstakt zeitlich so festgelegt wird, daß der Füllgrad des Reaktors konstant bleibt.

3. Verfahren nach Anspruch 1, dadurch gekennzeichnet, daß man die Polymerisation in Gegenwart einer wäßrigen Phase unter Ausbildung einer Polymerdispersion durchführt.

4. Verfahren nach Anspruch 1—3, dadurch gekennzeichnet, daß man durch Polymerisation von Ethylen und gegebenenfalls weiteren Monomeren Dispersionen von Ethylenhomo- oder -copolymerisaten herstellt.

5. Verfahren nach Anspruch 4, dadurch gekennzeichnet, daß man durch Copolymerisation von Ethylen und Vinylchlorid und/oder Vinylacetat wäßrige Dispersionen der Copolymerisate herstellt.

**Claims**

1. Process for the preparation of polymer dispersions by the continuous polymerisation of gaseous or gaseous and liquid monomers in the presence of a liquid phase in a pressure reactor, the degree of filling of which is maintained constant, characterized in that the degree of filling is continuously determined by regularly recurring pressure changes produced in the reactor at a constant initial pressure and a constant temperature, and the addition of monomers and the liquid phase and/or the removal of the reaction products is respectively increased or decreased using an automatic measuring and control system, to such an extent that the degree of filling of the reactor remains constant.

2. Process according to claim 1, characterized in that the reaction products are removed stroke-wise via a product discharge compartment, the degree of filling is determined by the change of pressure thereby occurring in the reactor and, accordingly, the next following discharge stroke is timed such that the degree of filling of the reactor remains constant.

3. Process according to claim 1, characterized in that the polymerisation is carried out in the presence of an aqueous phase with the formation of a polymer dispersion.

4. Process according to claim 1—3, characterized in that dispersions of ethylene homo- or copolymers are prepared by the polymerisation of ethylene and optionally other monomers.

5. Process according to claim 4, characterized in that by the copolymerisation of ethylene and vinyl chloride and/or vinyl acetate aqueous dispersions of the copolymers are prepared.

**Revendications**

1. Procédé de production de dispersions de polymères par polymérisation continue de monomères gazeux ou gazeux et liquides en présence d'une phase liquide dans un réacteur fonctionnant sous pression, dont le degré de remplissage est maintenu constant, caractérisé en ce que le degré de remplissage est déterminé continuellement par des variations de pression revenant régulièrement, produites dans le réacteur à pression initiale et à température constantes et l'addition de monomères et de phase liquide et/ou le prélèvement des produits réactionnels sont dans chaque cas augmentés ou réduits à l'aide d'un circuit automatique de mesure et de réglage, dans une proportion suffisante pour que le degré de remplissage du réacteur reste constant.

2. Procédé suivant la revendication 1, caractérisé en ce que les produits de réaction sont prélevés périodiquement par un sas à produits, le degré de remplissage est déterminé par la variation de pression qui apparaît alors dans le réacteur et, en conséquence, le cycle d'éclusage faisant suite dans chaque cas est établi dans le temps de manière que le degré de remplissage du réacteur reste constant.

3. Procédé suivant la revendication 1, caractérisé en ce qu'on effectue la polymérisation en présence d'une phase aqueuse avec formation d'une dispersion de polymère.

4. Procédé suivant les revendications 1—3, caractérisé en ce qu'on produit par polymérisation d'éthylène et, le cas échéant, d'autres monomères, des dispersions d'homopolymères ou de copolymères d'éthylène.

5. Procédé suivant la revendication 4, caractérisé en ce qu'on produit par copolymérisation d'éthylène et de chlorure de vinyle et/ou d'acétate de vinyle, des dispersions aqueuses des produits de copolymérisation.

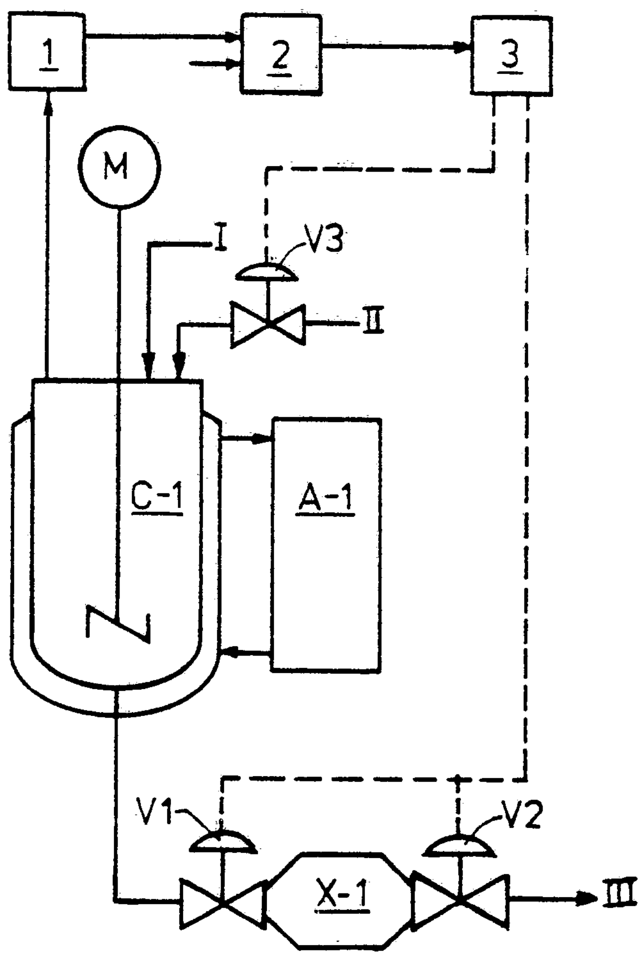


FIG. 1

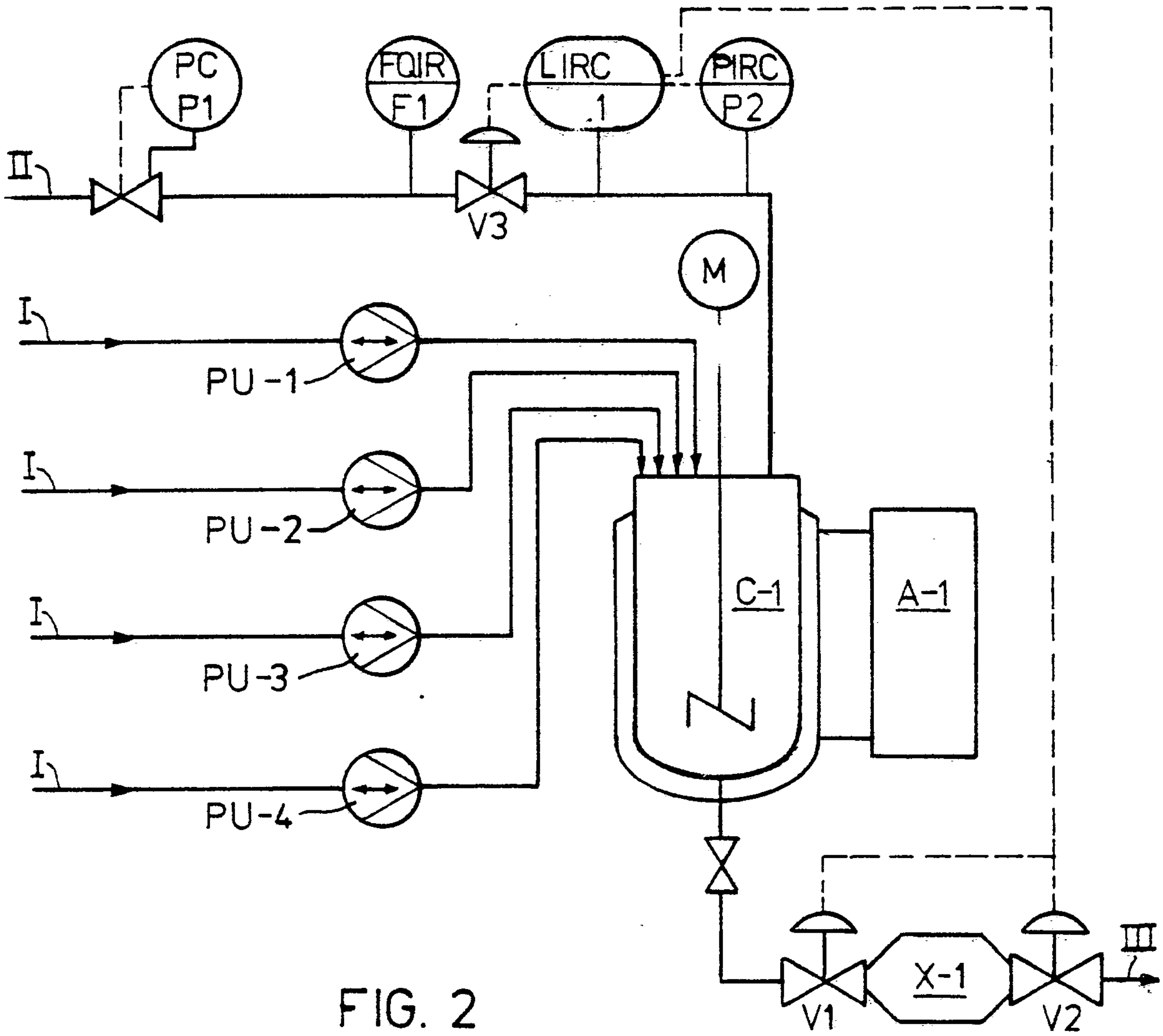
PC
P1
FQIR
F1
LIRC
1
PIRC
P2
II
V3
M
I
PU-1
I
PU-2
I
PU-3
I
PU-4
C-1
A-1
X-1
V1
V2
III

FIG. 2

FIG. 3

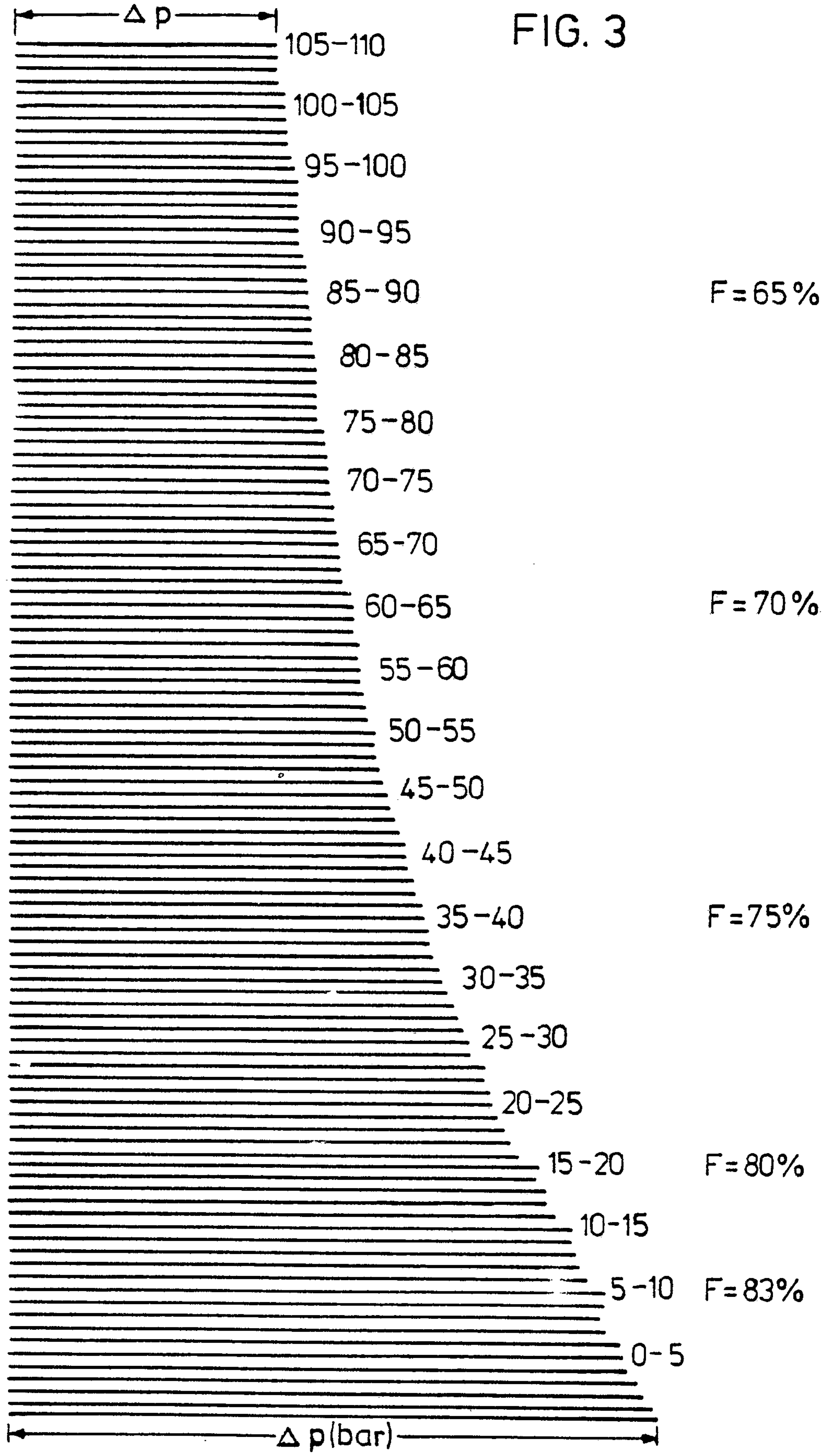
Δ p
105-110
100-105
95-100
90-95
85-90
80-85
75-80
70-75
65-70
60-65
55-60
50-55
45-50
40-45
35-40
30-35
25-30
20-25
15-20
10-15
5-10
0-5
F=65%
F=70%
F=75%
F=80%
F=83%
Δ p(bar)

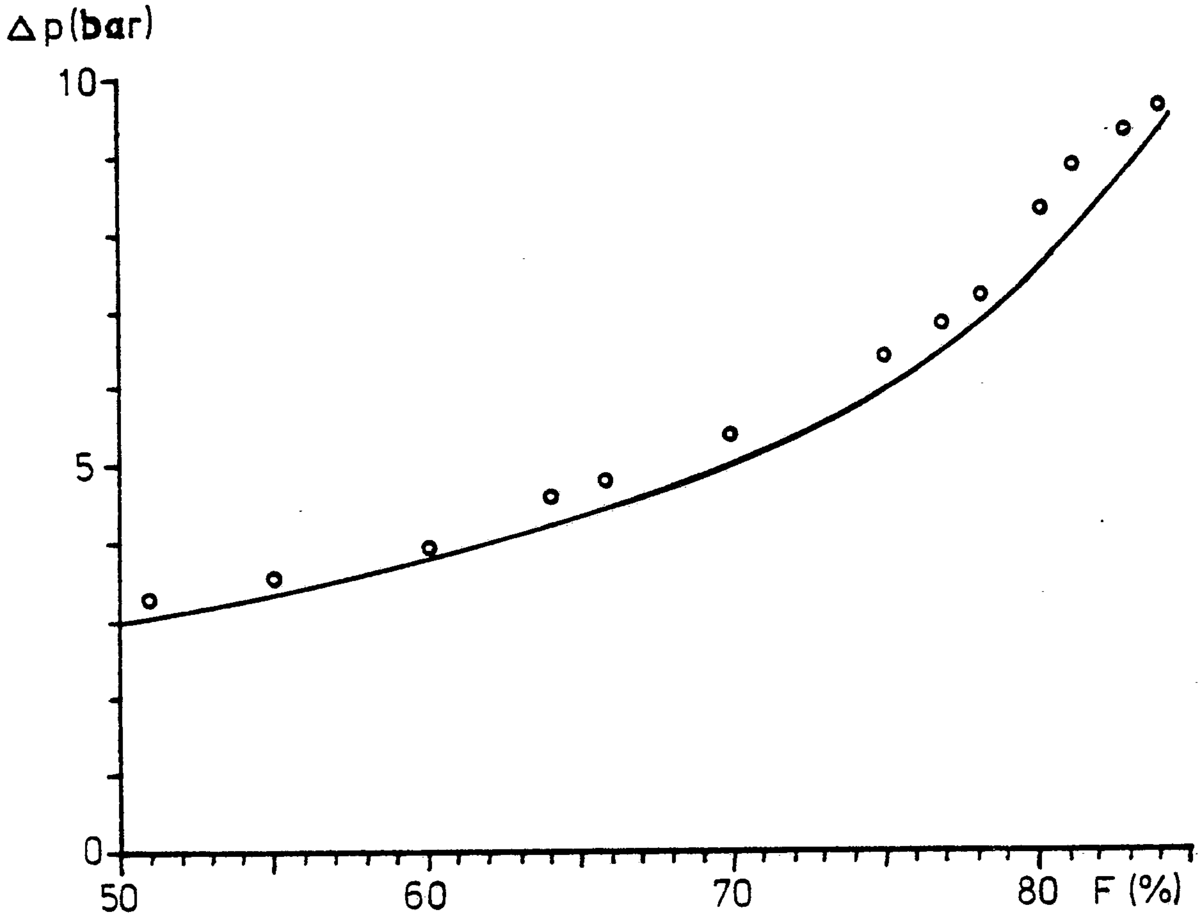


FIG. 4